# EUROPÄISCHE PATENTSCHRIFT

(11) **EP 3 059 190 B1**
(45) Veröffentlichungstag und Bekanntmachung des Hinweises auf die Patenterteilung: **13.01.2021**
(21) Anmeldenummer: 16155789.7
(22) Anmeldetag: 16.02.2016
(51) Int. Cl.: B65G 47/08, B65B 21/06, B65G 47/71, B65G 47/84, B65G 54/02

(54) **VORRICHTUNG UND VERFAHREN ZUM VERTEILEN UND GRUPPIEREN VON BEHÄLTERN**
DEVICE AND METHOD FOR DISTRIBUTING AND GROUPING CONTAINERS
PROCEDE ET DISPOSITIF DESTINES A LA DISTRIBUTION ET AU REGROUPEMENT DE RECIPIENTS

(30) Priorität: 20.02.2015 DE 102015203042
(43) Veröffentlichungstag der Anmeldung: 24.08.2016
(73) Patentinhaber: Krones AG, 93073 Neutraubling (DE)
(72) Erfinder: Walter, Ralf, 93073 Neutraubling (DE); Elsperger, Stefan, 93073 Neutraubling (DE); Neubauer, Michael, 93073 Neutraubling (DE)
(74) Vertreter: Grünecker Patent- und Rechtsanwälte PartG mbB

(56) Entgegenhaltungen:
- EP-A1- 2 500 296
- EP-A1- 2 743 192
- WO-A1-2006/079553
- WO-A2-2009/114332
- DE-A1- 4 134 735
- DE-A1-102004 048 515
- DE-A1-102011 076 864
- DE-A1-102013 106 742
- DE-A1-102013 107 565
- DE-B3-102006 025 090
- DE-U1- 29 517 091
- NL-A- 6 700 965
- US-A1- 2008 289 930

## Beschreibung

### Gebiet der Erfindung

Die vorliegende Erfindung betrifft eine Vorrichtung und ein Verfahren zum Verteilen und Gruppieren von Behältern, insbesondere von Flaschen, in einer Behälterbehandlungsanlage.

### Stand der Technik

In Behälterbehandlungsanlagen, beispielsweise in der Getränkeindustrie, werden die zu behandelnden Behälter häufig umverteilt oder umgruppiert, um beispielsweise mehrere parallel verarbeitbare Behälterströme oder Gebinde von Behältern zu erzeugen. So erfolgt der Behältertransport zwischen einer Etikettiermaschine und einem Einwegpacker zur Gebindeherstellung beispielsweise nach dem folgenden Schema: Im Nachlauf zur Etikettiermaschine werden die Behälter in der Regel einreihig transportiert, wobei fehlerhafte Behälter aus dem Behälterstrom ausgeschleust werden. Nach Behälterverzögerung mittels mehrfachen Geschwindigkeitsabbaus durch die verwendeten Transportbänder wird die einreihige Formation aufgelöst, sodass ein ungeordneter Massentransport entsteht. Aus diesem Massentransport werden die Behälter durch Eindrängelung in Gassen und Aufstauen der Behälter in den Einzelgassen schließlich verteilt, wobei eine Behältervorgruppierung durch einen sogenannten Behältereinteiler erfolgt. Die vorgruppierten Behälter können anschließend einem Einwegpacker zugeführt werden, um Gebinde von Behältern, beispielsweise in Form von Getränkekästen, zu erstellen.

Das oben beschriebene Verfahren zum Verteilen und Gruppieren von Behältern weist jedoch eine Vielzahl von Nachteilen in Hinsicht auf die Prozesssicherheit auf. So besteht beispielsweise aufgrund der reibungsbehafteten Geschwindigkeitsreduzierung der Behälter durch die Transportbänder eine Gefahr des Kippens. Bei weichen Behältern oder klebrigen Recycling-PET Behältern ist zudem auch die Gasseneindrängelung problematisch, wobei nicht druckresistente weiche Behälter allgemein schlecht unter Staudruck befördert werden können. Ein Transport der Behälter unter Staudruck wie in dem oben beschriebenen ungeordneten Massentransport führt darüber hinaus häufig zur Beschädigung der auf den Behältern aufgebrachten Etiketten und ist für Formbehälter wie z. B. rechteckige PET- oder auch Behälter aus weichem Karton generell nicht durchführbar. Des Weiteren gestaltet sich eine Umstellung auf ein anderes Behälterformat oft umständlich und fehleranfällig, wobei lange Inbetriebnahmezeiten aufgrund der teilweise hohen Komplexität in Kauf genommen werden müssen. Zudem hat die beschriebene Vorrichtung einen hohen Platzbedarf.

Die deutsche Patentschrift DE 10 2006 025 090 B3 lehrt eine Vorrichtung zum Überschieben von Verpackungseinheiten zu Verteil- und/oder Aussortierzwecken mit einer Vielzahl einzeln steuerbarer, auf einer Umlaufbahn einzeln verfahrbarer Überschiebelemente, die jeweils aus einem motorisch angetriebenen Schlitten und einem vertikal nach unten gerichteten Führungselement bestehen, wobei die Vorrichtung schräg zur Förderrichtung der Verpackungseinheiten angeordnet ist.

Die deutsche Patentanmeldung DE 10 2013 107 565 A1 offenbart das Aufteilen eines einspurigen Behälterstroms in einen mehrspurigen Behälterstrom mittels einer Vielzahl von Läufern eines elektrischen Linearantriebs. Zwischen einer Einlauffördereinrichtung und einer Auslauffördereinrichtung werden die Behälter an Greifern hängend über eine Lücke hinweg transportiert. DE 10 2013 107 565 A1 offenbart eine Vorrichtung zum Verteilen und Gruppieren von Behältern nach dem Oberbegriff des Anspruchs 1 bzw. Anspruchs 8.

Der vorliegenden Erfindung liegt somit die Aufgabe zugrunde, eine Vorrichtung und ein Verfahren zum Verteilen und Gruppieren von Behältern zu Verfügung zu stellen, welches die oben genannten Nachteile umgeht. Insbesondere sollen die Flexibilität der Anlage hinsichtlich eines Produktwechsels und die Prozesssicherheit erhöht werden. Darüber hinaus soll der Platzbedarf der Anlage reduziert werden, um Installationskosten einzusparen.

### Beschreibung der Erfindung

Die oben genannten Aufgaben werden gelöst durch eine Vorrichtung zum Verteilen und Gruppieren von Behältern in einer Behälterbehandlungsanlage gemäß Anspruch 1. Vorteilhafte Weiterbildungen sind Gegenstand der abhängigen Ansprüche.

Bei den Behältern kann es sich um Dosen, Glasflaschen oder andere Glasbehälter mit Deckel, Kunststoffflaschen, beispielsweise aus PET, Formbehälter, wie z. B. rechteckige PET-Behälter, Behälter aus Karton, oder ähnliches handeln. Insbesondere können Behälter unterschiedlicher Größen, Querschnitte und/oder unterschiedlichen Gewichts mit der erfindungsgemäßen Vorrichtung verteilt und gruppiert werden.

Das Verteilen und optionale Gruppieren der Behälter erfolgt dabei mittels der erfindungsgemäßen Transferfördereinrichtung in Kooperation mit der Auslauffördereinrichtung. Dazu weist die erfindungsgemäße Vorrichtung eine Einlauffördereinrichtung auf, die dazu ausgebildet ist, eine Vielzahl von Behältern in einem einspurigen Einlaufstrom der Transferfördereinrichtung zuzuführen. Dabei können die Behälter je nach Ausbildung der Einlauffördereinrichtung entweder mit einer festen oder variablen Teilung oder auf Stoß gefördert werden. Die Einlauffördereinrichtung kann das weiter unten beschriebene Transportband, auf dem die Behälter stehend befördert werden, eine staudruckbetriebene Gasse, eine per Riemen- oder Linearmotorantrieb angetriebene Transportstrecke, eine Transferschnecke oder ein Sternrad, beispielsweise als Auslaufstern einer Rundläufermaschine, umfassen. Die Behälter können von der Einlauffördereinrichtung bevorzugt stehend befördert werden. Alternativ können die Behälter jedoch auch schwebend, beispielsweise per Neckhandling für Flaschen, befördert werden, solange eine Übergabezone zur Übergabe der Behälter an die Transferfördereinrichtung vorgesehen ist, in der die Behälter stehend bewegt werden. Eine solche Übergabezone kann als Überschubblech oder Teil eines Transportbands gegeben sein. Optional kann der einspurige Behälterstrom, beispielweise durch Vorsehen einer Einteilschnecke, vor der Übergabe an die Transferfördereinrichtung auf eine gewünschte Teilung auseinander gefahren werden. Eine solche Teilung kann beispielsweise gewünscht sein, damit die unten genauer beschriebene Transferfördereinrichtung mehr als einen Behälter gleichzeitig von dem Einlaufstrom übernehmen kann.

Die Transferfördereinrichtung kann dazu ausgebildet sein, die Behälter einzeln oder in Gruppen von dem Einlaufstrom zu übernehmen. Dabei ist das Übernehmen von Behältern hier und im Folgenden als Übernahme der Kontrolle über den Transport, insbesondere in Hinblick auf Geschwindigkeit und Richtung, der Behälter zu verstehen. Gemäß der vorliegenden Erfindung ist die Transferfördereinrichtung derart ausgebildet, dass sie die Behälter stehend durch gezieltes Führen mittels einer Vielzahl umlaufender Führungselemente für die Behälter von dem einspurigen Einlaufstrom auf den mehrspurigen Auslaufstrom verteilt. Die Führungselemente können hierzu insbesondere alle gleich ausgebildet sein und derart gestaltet sein, dass die umlaufenden Führungselemente zur Übernahme eines oder mehrerer Behälter von dem Einlaufstrom in Eingriff mit den zu übernehmenden Behältern gebracht werden können. Form und Anordnung der Führungselemente hängen dabei von den zu transportierenden Behältertypen und der Art des Transports in der Einlauffördereinrichtung ab, können aber derart gewählt werden, dass eine Vielzahl unterschiedlicher Behältertypen und -großen ohne Änderung von Formatteilen transportiert werden können. Die Transferfördereinrichtung ist weiterhin derart ausgebildet, dass die Vielzahl der Führungselemente entlang einer oder mehreren bestimmten Bahnen umlaufen, wobei die Transferfördereinrichtung derart relativ zu der Einlauffördereinrichtung und der Auslauffördereinrichtung angeordnet ist, dass die Führungselemente die Behälter von der Einlauffördereinrichtung übernehmen und zur Auslauffördereinrichtung führen können. Dabei sind Einlauffördereinrichtung, Transferfördereinrichtung und Auslauffördereinrichtung derart ausgebildet und zueinander angeordnet, dass die Behälter zumindest zwischen Übernahme aus dem Einlaufstrom und Abgabe an den Auslaufstrom stehend transportiert werden.

Die Transferfördereinrichtung kann teilweise oder vollständig zwischen der Einlauffördereinrichtung und Auslauffördereinrichtung angeordnet sein, wobei zur Übernahme bzw. Abgabe der Behälter ein teilweiser Überlapp zwischen Transferfördereinrichtung und Einlauffördereinrichtung bzw. Auslauffördereinrichtung vorliegt. Dabei ist die Transferfördereinrichtung derart relativ zur Auslauffördereinrichtung angeordnet, dass die Behälter zumindest entlang eines Teils der Transferstrecke unter einem spitzen Winkel zur Förderrichtung der Auslauffördereinrichtung bei der Übergabe der Behälter an die Auslauffördereinrichtung befördert werden.

Erfindungsgemäß ist die Auslauffördereinrichtung dazu ausgebildet, die Behälter nach Übergabe von der Transferfördereinrichtung mehrspurig abzufördern. Die Anzahl und der Abstand der Förderspuren kann dabei in Abhängigkeit von der gewünschten Gruppierung gewählt werden. Ist z. B. eine vierreihige Gruppierung, beispielsweise zum Erstellen von vierreihigen Gebinden aus den Behältern, gewünscht, so sollte die Auslauffördereinrichtung wenigstens vier Förderspuren aufweisen, wobei auch mehr Förderspuren möglich sein können, um unterschiedliche Gebindegrößen zu ermöglichen. Die Förderspuren können dabei als separate Transportbänder oder aber als Förderspuren auf einem gemeinsamen Transportband ausgebildet sein.

Die Transferfördereinrichtung ist nun dazu ausgebildet, die von dem Einlaufstrom übernommenen Behälter gezielt zu der jeweils gewünschten Förderspur zu führen, wobei das oder die jeweiligen in Eingriff mit den Behältern stehenden Führungselemente dieses Führen bewerkstelligen. Dazu können die Führungselemente die Behälter aktiv durch Schieben zu der gewünschten Förderspur führen. Alternativ oder zusätzlich können die Führungselemente die von einem Transportmechanismus bewegten Behälter nach Bedarf gezielt abbremsen, bis sie bei der jeweils gewünschten Förderspur angelangt sind. Der Transportmechanismus kann beispielsweise durch das oder die Transportbänder der Auslauffördereinrichtung oder ein oder mehrere Transportbänder der Transferfördereinrichtung gegeben sein, solange die Behälter auf dem Band oder einer Gleitfläche stehend transportiert werden. In jedem Fall wird durch den mechanischen Eingriff des jeweiligen Führungselements eine Kraft auf den zu führenden Behälter ausgeübt, die derart gerichtet und dimensioniert ist, dass der von dem Einlaufstrom aufgenommene Behälter zu der gewünschten Förderspur bewegt wird. Die Transfer- und die Auslauffördereinrichtungen sind dabei derart ausgebildet, dass diese Kraft nach Übergabe des Behälters an die gewünschte Förderspur wieder aufgehoben werden kann. Dazu kann z. B. der mechanische Eingriff aufgehoben und/oder die momentane Geschwindigkeit des Führungselements geändert werden. Auch ist ein Entriegelungsmechanismus wie unten beschrieben zur Freigabe des Behälters denkbar.

Das gezielte Führen zu der gewünschten Förderspur kann insbesondere mittels einer Steuer- und/oder Regeleinheit der Transferfördereinrichtung erfolgen, die beispielsweise den genannten Entriegelungsmechanismus aktiviert und/oder die Geschwindigkeit der Führungselemente steuert. Die Steuer- und/oder Regeleinheit kann des Weiteren dazu ausgebildet sein, auch den Transport der Behälter im Einlaufstrom und/oder Auslaufstrom zu steuern. Dadurch kann eine reibungslose Zusammenarbeit der Einlauf-, Auslauf- und Transferfördereinrichtungen gewährleistet werden.

Gemäß einer Weiterbildung kann die Auslauffördereinrichtung wenigstens ein Transportband, insbesondere eine Vielzahl von parallel zueinander angeordneten Transportbändern zum mehrspurigen Transport von Behältern aufweisen. Dabei können die Behälter auf dem Transportband der Einlauffördereinrichtung stehend mit einem vorgegebenen Abstand oder auf Stoß befördert werden. Wie bereits erwähnt, werden die auf dem Transportband der Einlauffördereinrichtung beförderten Behälter einzeln oder in Gruppen von den Führungselementen der Transferfördereinrichtung übernommen, um die Behälter gezielt zu den jeweiligen Förderspuren der Auslauffördereinrichtung zu führen. Dabei ist der Vorgang der Übernahme durch die Führungselemente hier und im Folgenden derart zu verstehen, dass die Führungselemente in mechanischen Eingriff mit den zu führenden Behältern gebracht werden. Die eigentliche Beförderung der Behälter kann dabei zumindest teilweise von den Führungselementen geleistet werden, muss dies aber nicht. Es sind auch Weiterbildungen denkbar, bei denen die eigentliche Beförderung der Behälter zumindest teilweise von einem oder mehreren Transportbändern der Auslauffördereinrichtung und/oder der Transferfördereinrichtung bewerkstelligt wird, während die Führungselemente lediglich die Richtung und/oder die Geschwindigkeit der Bewegung der Behälter auf dem Weg von dem einspurigen Einlaufstrom zum mehrspurigen Auslaufstrom beeinflussen. Gemäß dieser Weiterbildung weist die Auslauffördereinrichtung wenigstens ein Transportband zum mehrspurigen Abfördern der Behälter auf. Dabei können die Förderspuren nebeneinander auf demselben Transportband angeordnet sein. Alternativ können mehrere parallel zueinander angeordnete Transportbänder zum mehrspurigen Transport der Behälter im Auslaufstrom vorgesehen sein. Die Transportbänder der Einlauf-, Auslauf- und eventuell Transferfördereinrichtungen sind dabei derart ausgebildet und zueinander angeordnet, dass die Behälter stehend von dem Transportband der Einlauffördereinrichtung zu dem oder den Transportbändern der Auslauffördereinrichtung geschoben werden können. Insbesondere können die Transportbänder in einer horizontalen Ebene angeordnet sein.

Die Transferfördereinrichtung umfasst einen Langstator-Linearmotorantrieb mit einer Vielzahl von einzeln und unabhängig voneinander bewegbaren Fördermitteln.

Im Falle eines Langstator-Linearmotorantriebs verfügt die Transferfördereinrichtung über eine Vielzahl von einzeln bewegbaren Fördermitteln. Das einzelne und unabhängige Bewegen bezieht sich dabei sowohl auf die Position als auch auf die Geschwindigkeit der Fördermittel. Dabei sind die Fördermittel so ausgebildet, dass sie einen oder mehrere Behälter mit einem individuellen Weg-Zeit-Profil entlang einer vorgegebenen Transportstrecke zwischen der Übernahme von der Einlauffördereinrichtung und der Übergabe an die Auslauffördereinrichtung transportieren können. Insbesondere können die Fördermittel als Schlitten oder Läufer ausgebildet werden, welche jeweils ein oder mehrere Führungselemente zum Führen der Behälter aufweisen. Bei einem Langstator-Linearmotorantrieb, wie er im Stand der Technik an sich bekannt ist, werden die Fördermittel mit ihren Führungselementen durch magnetische Wechselwirkung mit einem oder mehreren Langstatoren einzeln und unabhängig voneinander bewegt. Zur Definition der jeweiligen Weg-Zeit-Profile der Fördermittel, und damit der geführten Behälter, kann die erfindungsgemäße Transferfördereinrichtung eine Steuer- und/oder Regeleinrichtung umfassen, welche die Fördermittel und/oder den Linearmotorantrieb entsprechend ansteuert. Die Anzahl der Fördermittel kann gemäß dem gewünschten Durchsatz an Behältern der Transferfördereinrichtung sowie in Abhängigkeit von einer Länge der Transportstrecke gewählt werden. Im Allgemeinen werden wenigstens so viele Fördermittel vorgesehen, dass die einlaufenden Behälter ohne Verzögerungen auf die auslaufenden Förderspuren aufgeteilt werden können.

Die Vielzahl der Fördermittel mit ihren jeweiligen Führungselementen laufen erfindungsgemäß entlang einer Transportbahn der Transferfördereinrichtung um. Dabei ist die Form dieser Transportbahn grundsätzlich beliebig, solange ein Teil der Transportbahn derart zwischen der Einlauffördereinrichtung und der Auslauffördereinrichtung angeordnet ist, dass die Behälter aus dem Einlaufstrom von den Führungselementen übernommen und auf die auslaufenden Förderspuren verteilt werden können. Insbesondere können die Transportbahnen im Wesentlichen geschlossen sein, wobei im Wesentlichen geschlossen bedeutet, dass die jeweilige Transportbahn mindestens einen geschlossenen Weg für die jeweilige Vielzahl von Fördermitteln aufweist. Dies kann beispielsweise durch Bereitstellen einer Rückführstrecke als Teil der Transportbahn realisiert werden, wobei die Rückführstrecke ein Rückführen der Fördermittel zur Einlauffördereinrichtung nach Übergabe der Behälter an die Auslauffördereinrichtung ermöglicht. Neben einer Hauptstrecke sind dabei eine oder mehrere Nebenstrecken möglich, die mit der Hauptstrecke über Weichen verbunden sind (siehe unten). Entlang der Rückführstrecke werden die Fördermittel nicht nur zur Einlauffördereinrichtung zurückgeführt, sondern können dort auch gepuffert werden, falls Lücken im Einlaufstrom der Behälter auftreten sollten. Darüber hinaus muss nicht die gesamte jeweilige Transportbahn mit dem Linearmotorantrieb für die Fördermittel ausgestattet sein. Alternativ kann beispielsweise die Rückführstrecke mit einem kontinuierlichen Antrieb wie einem Transportriemen oder ähnlichem ausgestattet sein.

Da die Fördermittel und damit die Führungselemente derart einzeln und unabhängig voneinander bewegt werden können, können aufeinanderfolgende Behälter mit einem beliebigen Teilungsabstand in Förderrichtung entlang der Transportstrecke der Transferfördereinrichtung transportiert werden. Insbesondere können die Behälter dabei nach einem vorgegebenen Verteilschema beliebig beschleunigt und/oder abgebremst werden, um sie auf die auslaufenden Förderspuren zu verteilen. Auch eventuelle Lücken im einlaufenden Behälterstrom können durch entsprechend beschleunigtes Führen des oder der nachfolgenden Behälter bzw. entsprechend verzögertes Führen des oder der vorauseilenden Behälter geschlossen werden, sodass stets ein lückenloser Auslaufstrom gebildet werden kann.

Bei einer Transferfördereinrichtung mit Langstator-Linearmotorantrieb kann die zwischen Einlauffördereinrichtung und Auslauffördereinrichtung liegende Transportstrecke bzw. Transferstrecke geradlinig oder auch zumindest teilweise gekrümmt sein. Dadurch können Einlauffördereinrichtung und Auslauffördereinrichtung in einer Linie angeordnet sein. Das Führen der Behälter mittels eines Langstator-Linearmotorantriebs erfolgt ebenso wie bei dem unten beschriebenen Führen mittels eines Riemen- oder Kettenantriebs, indem die zu führenden Behälter auf einer Förderfläche stehen, wobei es sich bei dieser Förderfläche insbesondere um ein Transportband der Auslauffördereinrichtung oder der Transferfördereinrichtung handeln kann.

Zum Führen der Fördermittel des Langstator-Linearmotorantriebs entlang der jeweiligen Transportbahn kann die Transportbahn beispielsweise mindestens eine Führungsschiene und/oder einen Führungskanal aufweisen. Dementsprechend können die Fördermittel mindestens einen komplementären Führungskanal, einen Führungsstift und/oder eine oder mehrere geeignet angeordnete Führungsrollen aufweisen, welche z. B. mittels eines Spurkranzes auf der Führungsschiene der Transportbahn laufen. Eine Vielzahl alternativer Ausführungsformen, z. B. mittels Gleitlager, ist hierbei vorstellbar. Durch das Bereitstellen einer Führungsschiene an der Transportbahn kann ein reibungsarmes Leiten der Fördermittel entlang der Transportbahn ermöglicht werden. Darüber hinaus kann die Transportbahn über eine Lauffläche verfügen, auf welcher entsprechende Stützelemente, z. B. Stützrollen, abrollen bzw. gleiten können. Weiterhin kann die Transportbahn mindestens einen Sensor zur Bestimmung der Position der Fördermittel entlang der Transportbahn umfassen. Insbesondere kann durch regelmäßige und periodische Anordnung von Sensoren entlang zumindest eines Teilstücks der Transportbahn die Position eines Fördermittels auf diesem Teilstück der Transportbahn bestimmt werden. Alternativ kann die Positionsbestimmung der Fördermittel auch ohne zusätzliche Sensorik, beispielsweise mittels geberloser Regelung der Fördermittel (ELC - Encoderless Control), realisiert werden. Sensoren können als optische Sensoren, elektrische Sensoren, elektromagnetische Sensoren oder mechanische Sensoren ausgebildet sein. Solche Sensoren können beispielsweise im Vorlauf zur Übernahme der Behälter von dem Einlaufstrom vorgesehen sein, um eine Synchronisierung der Bewegung der Fördermittel, d.h. der Führungselemente, mit der Bewegung der aufzunehmenden Behälter zu erreichen. Dadurch und durch geeignetes Anordnen der Transportbahn zur Einlauffördereinrichtung können einzelne Behälter oder Gruppen von Behältern gezielt von dem Einlaufstrom übernommen werden.

Gemäß der vorliegenden Weiterbildung sind die Transportbahn und die Fördermittel des Langstator-Linearmotorantriebs derart ausgestaltet, dass die Fördermittel einzeln entlang der Transportstrecke geleitet werden können. Dies bedeutet, dass die Fördermittel je mindestens ein Reaktionselement aufweisen, welches mittels elektromagnetischer Wechselwirkung mit entlang der Transportbahn angeordneten Wechselwirkungselementen eine Kraft erfährt, durch welche das Fördermittel beschleunigt und somit bewegt werden kann. Durch gezieltes Ansteuern des Reaktionselements eines bestimmten Fördermittels und/oder eines oder mehrerer Wechselwirkungselemente in einem begrenzten Bereich der Transportbahn kann diese Kraftausübung auf ein bestimmtes Fördermittel beschränkt werden, wodurch das Fördermittel einzeln und unabhängig von anderen Fördermitteln entlang der Transportbahn geleitet werden kann.

Transportsysteme mit Linearmotorantrieb sind im Stand der Technik wohl bekannt. Allen Transportsystemen mit Linearmotorantrieb ist gemein, dass speziell dazu ausgebildete Transportelemente bzw. Fördermittel über magnetische Wechselwirkung mit dem oder den Langstatoren bzw. Linearmotorsträngen eines oder mehrerer Linearmotoren entlang einer oder mehrerer Führungsschienen bewegt werden.

Im Fall der Verwendung eines Linearmotorantriebs zum Führen der Behälter in der Transferfördereinrichtung sind also die Fördermittel und zumindest der Teil der jeweiligen Transportbahn entlang der Transportstrecke derart ausgebildet, dass die Fördermittel im Bereich der Transportstrecke mittels einer magnetischen Kraft, vorzugsweise in Wechselwirkung mit der Transportbahn, bewegt werden können. Der entsprechende Teil der Transportbahn kann insbesondere mit einem magnetischen Linearantrieb, zum Beispiel in Form eines synchronen oder asynchronen Linearmotors, ausgestattet sein. Dazu wird der entsprechende Abschnitt der Transportbahn mit einer Vielzahl von elektrischen Wicklungen in Form von einzeln ansteuerbaren Elektromagneten ausgerüstet. Um eine magnetische Wechselwirkung zwischen dem Fördermittel und den einzeln ansteuerbaren Elektromagneten der Transportbahn zu erzeugen, kann das Fördermittel mit einem oder mehreren Permanentmagneten bzw. nicht schaltenden Elektromagneten oder Eisenkernen ausgestattet werden.

In einer Ausführung kann das Fördermittel als ein passives Fördermittel ausgeführt sein, welches durch Wechselwirkung mit den von den einzeln ansteuerbaren Elektromagneten der Transportbahn erzeugten elektromagnetischen Wechselfeldern bewegt wird. Der mindestens eine Permanentmagnet bzw. nicht schaltende Elektromagnet bzw. Eisenkern des Fördermittels bildet somit das oben erwähnte Reaktionselement, während die einzeln ansteuerbaren Elektromagnete der Transportbahn die oben erwähnten Wechselwirkungselemente bilden. Bevorzugt ist bei Verwendung von passiven Fördermitteln eine Lokalisierungseinheit an der Transportbahn angebracht, um die Lage wenigstens eines Fördermittels und bevorzugt aller Fördermittel zu ermitteln und an eine Steuerung der Elektromagnete der Transportbahn weiterzugeben. Die Lokalisierungseinheit kann insbesondere durch die oben beschriebenen Sensoren realisiert werden. Die Stromstärke durch die elektrischen Wicklungen der Transportbahn kann von der Steuerung in Abhängigkeit von einem Kraftbedarf des zu bewegenden Fördermittels automatisch angepasst werden. Durch individuelles Regeln der Stromstärke durch einzelne Wicklungen der Transportbahn kann das Fördermittel außerdem beschleunigt, abgebremst oder mit einer konstanten vorgegebenen Geschwindigkeit bewegt werden.

Bei einer alternativen Ausführungsform ist das Fördermittel als aktives Fördermittel mit elektrischen Wicklungen versehen, welche die für den Antrieb notwendigen magnetischen Wechselfelder aufbringen können. Entsprechend wird der Abschnitt der Transportbahn mit Permanentmagneten bzw. nicht schaltenden Elektromagneten versehen. Hierbei können sowohl die für den Antrieb nötige elektrische Energie als auch für die Steuerung nötigen Signale via Induktionsübertragung auf die einzelnen Fördermittel übertragen werden. Die Steuerung kann sich demnach dezentral auf den einzelnen Fördermitteln befinden oder auch zentral in einer eigenen Steuereinheit untergebracht sein. Alternativ dazu kann die nötige elektrische Energie über eine entlang der Transportbahn angeordnete Leitung auf die Fördermittel übertragen werden. Des Weiteren ist eine Kombination einer Ausführung des Fördermittels als aktives Fördermittel mit einer Transportbahn mit einzeln ansteuerbaren Elektromagneten denkbar.

Zum Einsatz eines Linearmotorantriebs kann die jeweilige Transportbahn einen oder mehrere Linearmotorstränge aufweisen, die als Langstatoren von, insbesondere synchronen, Linearmotoren ausgebildet sind. In einer alternativen Ausführung können die Linearmotorstränge auch als asynchrone Linearmotoren ausgebildet sein, wobei der mindestens eine Permanentmagnet und/oder nicht schaltende Elektromagnet des Reaktionselements des Fördermittels und/oder ein elektrisch leitendes Element des Fördermittels, z. B. in Form einer metallischen Platte, an welcher der Permanentmagnet und/oder nicht schaltende Elektromagnet angebracht sind, als elektrische Leiter für die Induktion durch die asynchronen Linearmotoren fungieren.

Neben dem oben beschriebenen, als Magnettrasse ausgebildeten Teil der Transportbahn entlang der Transferstrecke zwischen Übernahmepunkt und Übergabepunkt kann die Transportbahn außerhalb der Transferstrecke weiterhin wenigstens eine Teilstrecke, beispielsweise die Rückführstrecke, umfassen, entlang derer die Fördermittel mit einer konstanten Geschwindigkeit bewegt werden. Die Teilstrecke kann hierzu eine Antriebsvorrichtung in Form eines Transportbandes, einer Transportkette oder ähnlichem umfassen. Durch Kombination einer Transportstrecke mit Magnetantrieb und einer Rückführstrecke mit einem mechanischen Antrieb können Installationskosten der gesamten Transferfördereinrichtung gesenkt werden.

In einer Weiterbildung kann das Fördermittel vollmagnetisch oder teilweise magnetisch und teilweise mechanisch oder vollmechanisch an der Transportbahn gelagert sein. Bei vollmagnetischer Lagerung ist der oben beschriebene Teil der Transportbahn als Magnetschwebebahn ausgebildet, wobei elektrische Wicklungen in der Transportbahn und/oder dem Fördermittel vorgesehen sind, welche eine magnetische Levitation des Fördermittels über der Transportbahn bewirken. Dadurch lässt sich die Reibung zwischen dem Fördermittel und der Transportbahn auf ein Minimum reduzieren. Bei teilweise magnetischer und teilweise mechanischer Lagerung kann das Fördermittel zusätzlich ein oder mehrere Stützelemente, zum Beispiel in Form von Stützrollen und/oder Führungsrollen aufweisen. Die zusätzlichen Stützelemente rollen oder gleiten dabei auf einer Lauffläche bzw. Führungsschiene der Transportbahn. Bei vollmechanischer Lagerung kann das Fördermittel ausschließlich durch das beschriebene mindestens eine Stützelement gelagert sein. Ergänzend oder alternativ hierzu kann eine Lagerung auch pneumatisch erfolgen, wobei die Transportbahn in dem entsprechenden Teilstück als Luftschwebebahn ausgeführt ist. Bei pneumatischer Lagerung ergibt sich wie auch bei vollständig magnetischer Lagerung eine Minimierung der Reibung zwischen dem Fördermittel und der Transportbahn.

Die Transferfördereinrichtung kann weiterhin eine Steuer- und/oder Regeleinrichtung, insbesondere einen Prozessrechner, zum Steuern des mindestens einen Fördermittels umfassen. Die Steuer- und/oder Regeleinrichtung kann dabei durch eine zentrale Steuereinheit und/oder durch dezentral an den Fördermitteln angeordnete Steuereinheiten realisiert werden. Die eine oder mehrere Steuereinheiten können dabei derart ausgebildet sein, dass sie die elektrischen Wicklungen der Transportbahn und/oder der Fördermittel derart individuell steuern und/oder regeln, dass die Fördermittel die mittels der jeweiligen Führungselemente übernommenen Behälter gezielt zur jeweiligen auslaufenden Förderspur führen.

Alternativ oder zusätzlich kann die Transferfördereinrichtung einen Riemen- oder Kettenantrieb umfassen, beispielsweise um, wie oben beschrieben, die unbeladenen Fördermittel entlang der Rückführstrecke zur Übernahmestelle an der Einlauffördereinrichtung zurück zu führen. Unter Inkaufnahme einer geringeren Flexibilität kann aber auch das Führen der Behälter entlang der Transportstrecke durch einen Riemen- oder Kettenantrieb bewältigt werden. Dabei sind die Vielzahl von Führungselementen zum Übernehmen der Behälter von dem Einlaufstrom in einem konstanten Abstand voneinander derart an dem Transportriemen bzw. der Transportkette angeordnet, dass sie bei geeigneter Umlaufgeschwindigkeit des Transportriemens bzw. der Transportkette in den einlaufenden Behälterstrom eintauchen und derart zwischen die Behälter des Einlaufstroms greifen, dass diese durch mechanischen Kontakt mit den Führungselementen zu der Auslauffördereinrichtung geführt werden können.

Unabhängig davon, ob die Führungselemente als Teil einzeln bewegbarer Fördermittel eines Langstator-Linearmotorantriebs vorgesehen sind oder über einen Riemen- oder Kettenantrieb angetrieben werden, können die Führungselemente jeweils wenigstens ein, insbesondere gesteuert verriegelbares und/oder gesteuert entriegelbares Anschlagelement aufweisen, das derart ausgebildet ist, dass es über mechanischen Eingriff mit wenigstens einem Behälter zum Abbremsen dieses Behälters verwendet werden kann. Das Anschlagelement kann dabei entsprechend der Form und Größe der zu führenden Behälter ausgebildet sein, beispielsweise als Anschlagplatte oder Anschlagbalken, und insbesondere derart ausgebildet sein, dass ein Verkippen der geführten Behälter während des Abbremsens verhindert werden kann. Darüber hinaus kann das Anschlagelement derart ausgebildet sein, dass auch Behälter unterschiedlicher Größe und/oder Form ohne Wechsel des Anschlagelements sicher geführt werden können. Um die geführten Behälter gezielt an die gewünschten Förderspuren der Auslauffördereinrichtung übergeben zu können, kann das Anschlagelement optional mit einem Verriegelungsmechanismus, beispielsweise in Form eines Drehriegels, ausgestattet sein. Nachdem das Anschlagelement in die Lücke zwischen zwei aufeinanderfolgenden Behältern des Einlaufstroms eingetaucht ist, kann dieser Verriegelungsmechanismus, beispielsweise über eine stationäre Nocke, betätigt werden, um den übernommenen Behälter vor dem Herausrutschen aus dem Führungselement zu schützen. Ist der Behälter an der gewünschten Förderspur angelangt, kann der Verriegelungsmechanismus, beispielsweise mittels einer stationären und schaltbaren Nocke, geöffnet werden, um den Behälter freizugeben. Das Anschlagelement kann besonders vorteilhaft in Kombination mit einem Transportband der Transferfördereinrichtung bzw. der Auslauffördereinrichtung eingesetzt werden, welches mit einer solchen Geschwindigkeit betrieben wird, dass der von dem Transportband beförderte Behälter gegen das Anschlagelement gefahren wird. Durch geeignete Relativgeschwindigkeit des Führungselements zum Transportband können die geführten Behälter gezielt auf die auslaufenden Förderspuren verteilt werden, wobei gleichzeitig Gruppen von Behältern gebildet werden können.

In dem Fall, dass die Transferfördereinrichtung einen Langstator-Linearmotorantrieb aufweist, können die Führungselemente alternativ oder zusätzlich je wenigstens ein Schubelement aufweisen, das derart ausgebildet ist, dass es über mechanischen Eingriff mit wenigstens einem Behälter zum seitenstabilen Vorschieben dieses Behälters verwendet werden kann. Das Schubelement kann dabei entsprechend der Form und/oder Größe der zu führenden Behälter derart ausgebildet sein, dass die zu führenden Behälter seitenstabil, d. h. ohne seitliches Herausrutschen oder Kippen, von der Übernahmestelle zur Übergabestelle geschoben werden können. Auch hier sind Ausbildungen der Schubelemente möglich, die Behälter unterschiedlicher Formen und Größen seitenstabil führen können. Mittels des Langstator-Linearmotorantriebs können die Behälter durch mechanischen Kontakt mit den Schubelementen mit einer gewünschten Geschwindigkeit über eine Förderfläche geschoben werden. Beispielsweise können die Behälter gezielt von einem Transportband der Einlauffördereinrichtung an den entsprechenden Stellen auf an dieses Transportband angrenzende parallel angeordnete Transportbänder der Auslauffördereinrichtung geschoben werden.

Gemäß einer speziellen Weiterbildung kann die Transferfördereinrichtung weiterhin eine Vielzahl von steuerbaren Weichen aufweisen, die eine Hauptstrecke der Transferfördereinrichtung mit einer Vielzahl den auslaufenden Behälterspuren zugeordneter Nebenstrecken verbindet. In dieser Weiterbildung umfasst die Transportbahn des Langstator-Linearmotorantriebs neben der Hauptstrecke eine Vielzahl von Nebenstrecken, die mit der Hauptstrecke über Weichen verbunden sind. Über diese Weichen können die Fördermittel, und mit ihnen die geführten Behälter, gezielt auf die Nebenstrecken ausgeleitet werden, die der jeweils gewünschten Förderspur, zu der der Behälter geführt werden soll, zugeordnet sind. Nach Übergabe der Behälter werden die nunmehr unbeladenen Fördermittel über weitere Weichen wieder in die Hauptstrecke der Transportbahn eingeleitet und anschließend zur Einlauffördereinrichtung zurückgeführt.

Die Transferfördereinrichtung weist weiterhin wenigstens eine Teilstrecke auf, die die Auslauffördereinrichtung, d. h. deren Förderspuren, unter einem Winkel α kreuzt, der größer als 0° und kleiner als 90° ist, wobei der Winkel α insbesondere in etwa durch die Formel cos*α* = *vₐᵤₛlvₜᵣₐₙₛ* mit einer konstanten Fördergeschwindigkeit *vₐᵤₛ* der Behälter im Auslaufstrom und einer konstanten Fördergeschwindigkeit *vₜᵣₐₙₛ* der Behälter entlang der Teilstrecke der Transferfördereinrichtung gegeben sein kann. Die Teilstrecke kann dabei die gesamte, oben beschriebene Transportstrecke zwischen dem Übernahmepunkt für die Übernahme der Behälter von der Einlauffördereinrichtung und dem (letzten) Übergabepunkt für die Übergabe der Behälter an die Auslauffördereinrichtung umfassen, oder aber nur den Teil der Transportstrecke im Bereich der Übergabepunkte. Gemäß dieser Weiterbildung kreuzt diese Teilstrecke die Auslauffördereinrichtung unter einem spitzen Winkel a. Bei einer solchen Anordnung können die von der Transferfördereinrichtung geführten Behälter gezielt zu den jeweiligen auslaufenden Behälterspuren geführt werden, indem sie beispielsweise mittels der Führungselemente entsprechend schräg über die Gruppe der parallel laufenden Förderspuren geführt werden, um an der gewünschten Förderspur freigegeben zu werden. Gibt man eine konstante Fördergeschwindigkeit *Vₐᵤₛ* der Behälter in den Förderspuren des Auslaufstroms vor und weiterhin eine konstante Fördergeschwindigkeit *vₜᵣₐₙₛ* der Behälter entlang der Teilstrecke der Transferfördereinrichtung, so können aufeinanderfolgende Behälter derart auf die Förderspuren verteilt werden, dass sie bereits gruppiert abgefördert werden, wenn dieser Winkel α in etwa durch die Formel cos *α* = *vₐᵤₛ*/*vₜᵣₐₙₛ* gegeben ist. Dabei bedeutet "in etwa" in diesem Zusammenhang, dass der Winkel innerhalb von Installationstoleranzen der genannten Bedingung genügt. Bei anderen Winkeln kann diese Gruppierung, beispielsweise mittels der unten beschriebenen Weiterbildung der Auslauffördereinrichtung nachträglich hergestellt werden.

Gemäß einer Weiterbildung kann die Auslauffördereinrichtung weiterhin ein Paar parallel zueinander angeordneter Langstator-Linearmotorantriebe mit einer Vielzahl von paarweise durch ein Querelement, insbesondere einen Anlaufbalken, miteinander verbundenen Fördermitteln umfassen. Die derart angeordneten Linearmotorantriebe sind dabei dem Bereich der Auslauffördereinrichtung, in dem die Behälter auf die Förderspuren verteilt werden, prozesstechnisch nachgeordnet, sodass noch nicht gruppierte Behälter auf den Förderspuren durch gezieltes Bewegen der Paare von Fördermitteln zu Gruppen zusammengefasst werden können. Dazu können die noch nicht senkrecht zur Förderrichtung in einer Linie ausgerichteten Behälter mittels des Querelements ausgerichtet werden. Beispielsweise können die durch das oder die Transportbänder der Auslauffördereinrichtung schneller als die Querelemente beförderten Behälter gegen diese Querelemente anlaufen und somit abgebremst werden. Andererseits können nachlaufende Behälter durch ein schneller laufendes Querelement angeschoben werden, bis sie mit den vorauseilenden Behältern in einer Linie liegen. Dazu können die die Paare bildenden Fördermittel der Linearmotorantriebe mittels einer Steuer- und/oder Regeleinheit, auch unabhängig voneinander, entsprechend bewegt werden. Die Transportbahnen der Linearmotorantriebe können zum Rückführen der Fördermittel Rückführstrecken in einer vertikal versetzten Ebene zur Transportebene der Behälter aufweisen. Die Querelemente, insbesondere in Form von Anlaufbalken, können erneut derart ausgebildet sein, dass ein Verkippen der Behälter während des Gruppierens vermieden werden kann. Darüber hinaus können die Querelemente gelenkig an den jeweiligen Fördermitteln gelagert sein, sodass die Fördermittel der Paare vorübergehend mit unterschiedlichen Geschwindigkeiten bewegt werden können, um eine Schrägstellung der Querelemente in Bezug auf die Senkrechte zur Förderrichtung bewirken zu können. Nach Bedarf können die Querelemente mit variabler Länge, beispielsweise mittels eines Federmechanismus ausgebildet werden.

Die oben genannten Aufgaben werden auch durch ein Verfahren zum Verteilen und Gruppieren von Behältern in einer Behälterbehandlungsanlage gemäß Anspruch 8 gelöst. Vorteilhafte Weiterbildungen sind Gegenstand der abhängigen Ansprüche.

Dabei können dieselben Variationen und Weiterbildungen, die oben im Zusammenhang mit der erfindungsgemäßen Vorrichtung beschrieben wurden, auch auf das Verfahren zum Verteilen und Gruppieren von Behältern angewendet werden. Insbesondere kann die Transferfördereinrichtung derart ausgebildet und bzgl. der Einlauf- und Auslauffördereinrichtungen angeordnet sein, dass die umlaufenden Führungselemente je einen oder mehrere Behälter aus dem Einlaufstrom übernehmen und gezielt zu der jeweils gewünschten Förderspur der Auslauffördereinrichtung führen können. Dazu werden die Führungselemente mittels einer Steuer- und/oder Regeleinheit derart bewegt, dass sie im Bereich der Übernahme der Behälter synchron mit den Behältern im Einlaufstrom bewegt werden. Durch Annähern der Führungselemente an den Einlaufstrom werden diese dann in mechanischen Eingriff mit den Behältern gebracht, sodass die Transferfördereinrichtung die Kontrolle über den Transport der Behälter, insbesondere deren Geschwindigkeit, übernimmt. Sowohl in der Einlauffördereinrichtung als auch in der Auslauffördereinrichtung werden die Behälter mit Transportbändern stehend befördert. Während dies in der Einlauffördereinrichtung erfindungsgemäß einspurig geschieht, erfolgt der Transport in der Auslauffördereinrichtung mehrspurig, je nach gewünschter Behälterverteilung bzw. Gebindegröße. Dabei kann der mehrspurige Behältertransport wie oben beschrieben mittels eines einzigen Transportbandes oder einer entsprechenden Anzahl von parallel angeordneten Transportbändern erfolgen.

Das Verteilen der Behälter mittels der Transferfördereinrichtung erfolgt erfindungsgemäß, indem die Behälter über mechanischen Kontakt mit den Führungselementen gezielt zu den gewünschten auslaufenden Förderspuren bewegt werden. Dabei kann die Bewegung der Behälter im Bereich der Transferstrecke durch Kombination eines Vorschiebens und/oder Abbremsens der Behälter mittels der Führungselemente mit einem zugrunde liegenden Transport der Behälter, beispielsweise durch ein Transportband der Transferfördereinrichtung bzw. der Auslauffördereinrichtung, erzeugt werden. Zum Verteilen der Behälter können diese insbesondere quer über die nicht gewünschten Förderspuren der Auslauffördereinrichtung geschoben oder geführt werden. Nachdem die Behälter durch Aufheben des mechanischen Kontakts mit den Führungselementen an die auslaufenden Förderspuren übergeben wurden, werden die nunmehr unbeladenen Führungselemente umlaufend zur Übernahmestelle zurückgeführt.

Gemäß einer Weiterbildung können die Behälter bei der Übernahme der Behälter von dem Einlaufstrom vereinzelt werden. Dies ist besonders dann von Vorteil, wenn die Behälter einzeln den gewünschten Förderspuren zugeführt werden sollen. Die Vereinzelung der Behälter kann dabei insbesondere durch die Führungselemente selbst, bzw. deren mechanischen Eingriff mit den Behältern erfolgen. Wie oben erwähnt werden die Führungselemente dabei derart synchron mit den Behältern im Einlaufstrom bewegt, dass sie durch Annäherung an die Einlauffördereinrichtung jeweils zwischen zwei aufeinanderfolgende Behälter eintauchen. Durch Ausüben einer Kraft über die Führungselemente auf die Behälter werden letztere somit einzeln geführt und können gezielt an eine gewünschte Stelle bewegt werden.

Erfindungsgemäß werden die Behälter mittels eines Langstator-Linearmotorantriebs mit einer Vielzahl von einzeln und unabhängig voneinander bewegbaren Fördermitteln verteilt. Dabei können dieselben Weiterbildungen und Variationen, die zuvor im Zusammenhang mit dem Linearmotorantrieb beschrieben wurden, auch hier zum Einsatz kommen. Insbesondere können die Fördermittel derart individuell mittels einer Steuer- und/oder Regeleinheit der Transferfördereinrichtung bewegt werden, dass ihre Führungselemente einzelne Behälter oder Gruppen von Behältern aus dem Einlaufstrom übernehmen und gezielt zu den gewünschten Förderspuren führen. Dabei können eventuelle Lücken im Einlaufstrom dadurch geschlossen werden, dass die Fördermittel bei Bedarf auf den nächsten Behälter am Übergabepunkt warten. Durch Beschleunigen der nachlaufenden Fördermittel und/oder Verzögern der vorauseilenden Fördermittel kann die Lücke dann wieder zusammengefahren werden. Eine solche Flexibilität ist zwar bei Verwendung eines Riemen- oder Kettenantriebs nicht gegeben. Dafür reduzieren sich jedoch die Installations- und Betriebskosten. Auch die mittels Riemen- oder Kettenantriebs umlaufend bewegten Führungselemente können mit den Behältern im Einlaufstrom synchronisiert werden.

Gemäß einer speziellen Weiterbildung können die Behälter über mechanischen Eingriff wenigstens eines, insbesondere gesteuert verriegelbaren und/oder gesteuert entriegelbaren Anschlagelements der Führungselemente abgebremst und/oder über mechanischen Eingriff wenigstens eines Schubelements der Führungselemente vorgeschoben werden. Zum Abbremsen werden die Führungselemente dabei derart gesteuert bewegt, dass die Behälter aufgrund der Transportgeschwindigkeit der Transportbänder, auf denen sie stehend befördert werden, gegen die Anschlagelemente anlaufen. Zum Vorschieben werden umgekehrt höhere Geschwindigkeiten der Führungselemente im Vergleich zur Transportgeschwindigkeit der Transportbänder und/oder eine Geschwindigkeitskomponente quer zur Richtung der Transportbänder benötigt. Durch gesteuertes Verriegeln bzw. Entriegeln der Anschlagelemente können die mitgeführten Behälter sicher an die Führungselemente gebunden bzw. von diesen freigegeben werden. Dadurch kann durch Lösen der Verriegelung eine gezielte Übergabe der Behälter an die auslaufenden Förderspuren erfolgen. Die Steuerung des Verriegelungsmechanismus kann beispielsweise mittels, insbesondere schaltbarer, Nocken, einer Steuerkurve oder einer Schaltelektrik realisiert werden.

Gemäß einer weiteren Weiterbildung können einige oder alle Fördermittel über eine Vielzahl von steuerbaren Weichen von einer Hauptstrecke der Transferfördereinrichtung auf eine Vielzahl den auslaufenden Behälterspuren zugeordneter Nebenstrecken ausgeleitet werden. Beim Ausleiten der Fördermittel werden die von ihnen geführten Behälter mitgenommen und zu den jeweiligen Förderspuren geführt. Dadurch kann durch gesteuertes Schalten der Weichen eine gezielte Verteilung der Behälter auf die Behälterspuren erfolgen, wobei die Steuerung der Weichen von der Steuer- und/oder Regeleinheit der Transferfördereinrichtung übernommen werden kann.

Erfindungsgemäß werden die Behälter von der Transferfördereinrichtung zum Verteilen der Behälter entlang einer Teilstrecke bewegt, die die auslaufenden Förderspuren bzw. Behälterspuren unter einem Winkel α kreuzt, der größer als 0° und kleiner als 90° ist, wobei der Winkel α insbesondere in etwa durch die Formel cos *α* = *vₐᵤₛ*/*vₜᵣₐₙₛ* mit einer konstanten Fördergeschwindigkeit *vₐᵤₛ* der Behälter im Auslaufstrom und einer konstanten Fördergeschwindigkeit *vₜᵣₐₙₛ* der Behälter entlang der Teilstrecke der Transferfördereinrichtung gegeben sein kann. Bevorzugt werden die Behälter in dieser Weiterbildung mit konstanten Fördergeschwindigkeiten von den Führungselementen bzw. dem oder den Transportbändern der Auslauffördereinrichtung befördert. Unter dem genannten Winkel werden die geführten Behälter somit genau mit einer solchen Geschwindigkeit schräg zu den Förderspuren bewegt, dass sie bei Übergabe an die Förderspuren eine Linie senkrecht zu den Förderspuren bilden und somit bereits gruppiert an die Auslauffördereinrichtung übergeben werden.

Alternativ oder ergänzend können die mehrspurig auslaufenden Behälter mittels eines Paares parallel zueinander angeordneter Langstator-Linearmotorantriebe mit einer Vielzahl von paarweise durch ein Querelement, insbesondere einen Anlaufbalken miteinander verbundenen Fördermitteln gruppiert werden. Auch hier können die oben beschriebenen Weiterbildungen Anwendung finden. Insbesondere können die Fördermittel der Paare von Fördermitteln mittels einer Steuer- und/oder Regeleinheit derart gesteuert werden, dass sie die in den parallelen Förderspuren transportierten Behälter durch Abbremsen oder Anschieben in einer Linie ausrichten. Dazu kann wenigstens eines der beiden Fördermittel eines Paares zeitweise mit einer geringeren Geschwindigkeit als der Fördergeschwindigkeit der Förderspuren bewegt werden, nachdem das Querelement vor den zu gruppierenden Behältern positioniert wurde. Dadurch laufen die Behälter gegen das Querelement an und werden solange abgebremst, bis sie eine Linie bilden. Im Bereich der Auslauffördereinrichtung können das oder die Transportbänder derart entlang der Laufrichtung geteilt vorgesehen sein, dass ein erster Bandabschnitt im Bereich der Verzögerungsstrecke der Querelemente mit einer ersten Fördergeschwindigkeit angetrieben wird, während der darauffolgende zweite Bandabschnitt mit einer, insbesondere geringeren, Ziel-Fördergeschwindigkeit der verzögerten Behälter angetrieben wird. Zeitgleich zu dem Vorgang der Linienbildung können mehrere Behälterreihen mittels der unabhängig verfahrbaren Querelemente zu Gruppen zusammengeschoben bzw. vorgruppiert werden, welche der späteren Gebindeformation entsprechen. Die Steuer- und/oder Regeleinheit bewegt die Paare von Fördermitteln dabei so, dass das, insbesondere anfänglich schräg zur Senkrechten zur Förderrichtung stehende, Querelement schließlich senkrecht zur Förderrichtung ausgerichtet ist. Anschließend werden die Paare von Fördermitteln mit der Fördergeschwindigkeit weiterbewegt. Umgekehrt kann das Querelement auch hinter den auszurichtenden Behältern platziert werden. Wenigstens eines der Fördermittel des Paares von Fördermitteln wird dann mittels der Steuer- und/oder Regeleinheit schneller als die Fördergeschwindigkeit bewegt, sodass die Behälter von hinten solange angeschoben werden, bis sie in einer Linie ausgerichtet sind. Auch hier werden die Fördermittel anschließend mit der Fördergeschwindigkeit weiterbewegt. Auch in diesem Fall ist ein zweigeteiltes Transportband vorstellbar, bei welchem nun jedoch die Ziel-Fördergeschwindigkeit der angeschobenen Behälter höher als die erste Fördergeschwindigkeit des ersten Bandabschnitts ist. Auf diese Weise können die möglichweise versetzt zueinander an die auslaufenden Förderspuren übergebenen Behälter in einer Linie senkrecht zur Förderrichtung ausgerichtet und somit gruppiert werden. Eine nachgeschaltete Packvorrichtung, beispielsweise ein Einweg-Packer, kann die so gebildeten vorgruppierten Reihen anschließend mittels eines Schubbalkensystems auf die exakte Packformation zusammenschieben, um Gebinde von Behältern zu bilden. Die beschriebene Vorrichtung zum Gruppieren der Behälter kann weiterhin zur Pufferung von Behältern dienen, falls es in dem nachfolgenden Prozess zu einer Störung kommt.

Die oben beschriebenen Vorrichtungen und Verfahren zum Verteilen und Gruppieren von Behältern gestatten es, eine Vielzahl unterschiedlicher Behältertypen und -großen sicher und ohne Beschädigungen, beispielsweise der aufgebrachten Etiketten, auf mehrere Förderspuren zu verteilen und zu gruppieren. Da die Schubelemente und Anschlagelemente für eine Vielzahl unterschiedlicher Behältertypen und -großen ausgelegt werden können, kann auf zeitaufwändige Wechsel von Formatteilen bei einem Produktwechsel verzichtet werden. Darüber hinaus erfüllt die beschriebene Vorrichtung eine Pufferfunktion.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
- Fig. 1: zeigt eine beispielhafte Ausführungsform einer Vorrichtung zum Verteilen und Gruppieren von Behältern gemäß der vorliegenden Erfindung in perspektivischer Darstellung.
- Fig. 2: stellt eine beispielhafte Ausführungsform eines Fördermittels und einer Transportbahn eines Linearmotorantriebs dar.
- Fig. 3: stellt schematisch die Übernahme der Behälter von der Einlauffördereinrichtung durch die Transferfördereinrichtung dar.
- Fig. 4: stellt schematisch die Übergabe der Behälter von der Transferfördereinrichtung an die Auslauffördereinrichtung in perspektivischer Ansicht dar.
- Fig. 5: zeigt die Übergabe der Behälter in Draufsicht.
- Fig. 6: stellt schematisch eine alternative Vorrichtung zum Verteilen und Gruppieren von Behältern mit einer fächerartigen Transferfördereinrichtung gemäß der vorliegenden Erfindung dar.
- Fig. 7: stellt die Übernahme der Behälter durch die Transferfördereinrichtung der Fig. 6 dar.
- Fig. 8: zeigt ein exemplarisches Schubelement der Transferfördereinrichtung der Fig. 6.
- Fig. 9: zeigt eine perspektivische Darstellung eines Langstator-Linearmotorantriebs für das Schubelement der Fig. 8.
- Fig. 10: zeigt die Übergabe bereits gruppierter Behälter von der Transferfördereinrichtung der Fig. 6 an die Auslauffördereinrichtung.
- Fig. 11: zeigt eine Gruppiervorrichtung für die Behälter gemäß der vorliegenden Erfindung.

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

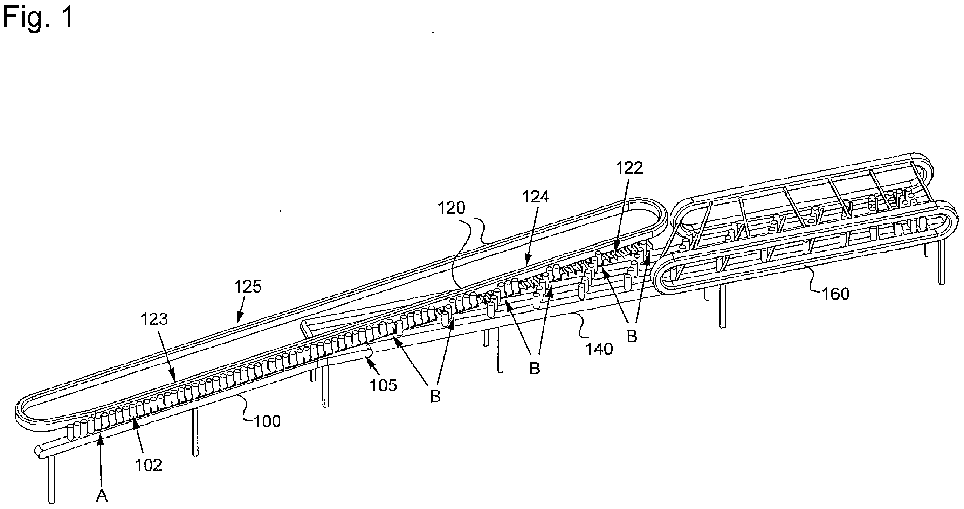

Figur 1 zeigt eine beispielhafte Ausführungsform einer Vorrichtung zum Verteilen und Gruppieren von Behältern gemäß der vorliegenden Erfindung in perspektivischer Darstellung. Die Vorrichtung umfasst eine Einlauffördereinrichtung 100, eine Transferfördereinrichtung 120 und eine Auslauffördereinrichtung 140, wobei die Auslauffördereinrichtung 140 in dieser nicht limitierenden Weiterbildung zusätzlich eine Vorrichtung 160 zum Gruppieren der Behälter umfasst, welche unten genauer beschrieben wird. Die Transferfördereinrichtung 120 ist derart bzgl. der Einlauffördereinrichtung 100 und der Auslauffördereinrichtung 140 angeordnet, dass die Behälter mittels der Vielzahl von umlaufenden Führungselementen 122 aus dem Einlaufstrom 102 übernommen und zu den Förderspuren der Auslauffördereinrichtung 140 geführt werden können.

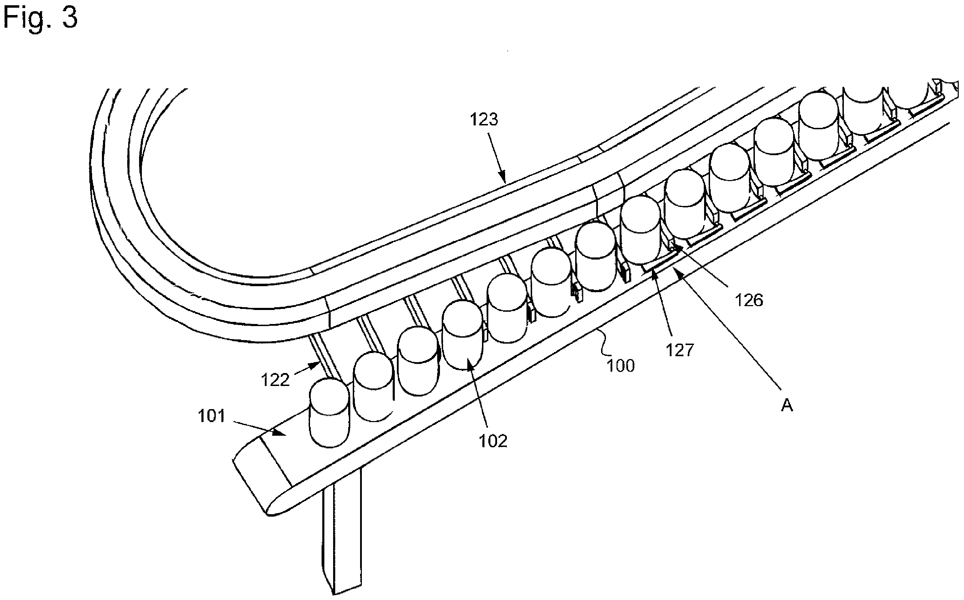

Die Transferfördereinrichtung 120 umfasst eine Teilstrecke 123, entlang derer die Führungselemente 122 synchron mit den Behältern im Einlaufstrom bewegt werden und dabei zwischen aufeinanderfolgende Behälter eintauchen. In Figur 3 ist diese Übernahme der Behälter von der Einlauffördereinrichtung 100 durch die Führungselemente 122 der Transferfördereinrichtung schematisch dargestellt. Die Behälter 102 werden stehend auf einem Transportband 101 der Einlauffördereinrichtung 100 befördert, wobei die entlang der Teilstrecke 123 bewegten Führungselemente 122 jeweils zwischen zwei aufeinanderfolgende Behälter eintauchen. Dies geschieht, indem sich die Teilstrecke 123 der Transportbahn 101 kontinuierlich annähert. Nachdem die Führungselemente 122 vollständig in den Einlaufstrom der Behälter hineingefahren wurden, werden sie verriegelt, um ein frühzeitiges Herausrutschen der Behälter zu vermeiden. Dazu weisen die Führungselemente in der hier dargestellten exemplarischen Weiterbildung neben einer Anschlagplatte 126 einen Drehriegel 127 auf, der beispielsweise mittels einer feststehende Nocke (nicht dargestellt) an der Transportbahn 101 umgelegt werden kann. Die Anschlagplatte 126 kann mit ausreichender Höhe ausgebildet sein, sodass ein Verkippen der gegen die Anschlagplatte anlaufenden Behälter vermieden werden kann. Zudem können Anschlagplatte 126 und Drehriegel 127 der Führungselemente 122 derart ausgelegt werden, dass eine Vielzahl unterschiedlicher Behältertypen und -großen sicher mit den Führungselementen geführt werden können.

Die Führungselemente 122 sind an Fördermitteln befestigt, die mittels eines Langstator-Linearmotorantriebs einzeln und unabhängig voneinander bewegt werden. In diesem Fall kann durch Anpassen der Geschwindigkeiten und Positionen der Fördermittel flexibel auf das Auftreten einer Lücke im Einlaufstrom 102 reagiert werden. Dies ist zwar bei einem Riemen- oder Kettenantrieb für die Führungselemente 122 nicht möglich, jedoch reduzieren sich bei einem solchen Antrieb die Installations- und Betriebskosten.

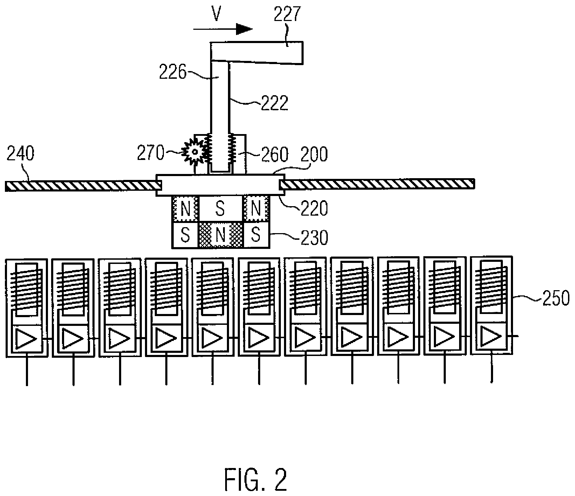

In Figur 2 ist eine beispielshafte Ausführungsform eines Fördermittels und einer Transportbahn eines Linearmotorantriebs dargestellt. Die vorliegende Erfindung beschränkt sich jedoch nicht auf die hier dargestellte spezielle Ausführung des Fördermittels, sondern ist auf jede Art von individuell bewegbaren Fördermitteln anwendbar, die geeignete Führungselemente zum Führen der Behälter aufweisen. Das hier dargestellte Fördermittel 200 kann mittels einer Führungsschiene 240 entlang der Transportbahn geleitet werden. Dabei ist das Fördermittel in dieser speziellen Ausführung durch ein Gleitlager 220 an der Führungsschiene 240 gelagert. Die Figur zeigt weiterhin ein Führungselement 222, mittels dessen das Fördermittel die Behälter erfassen und führen kann.

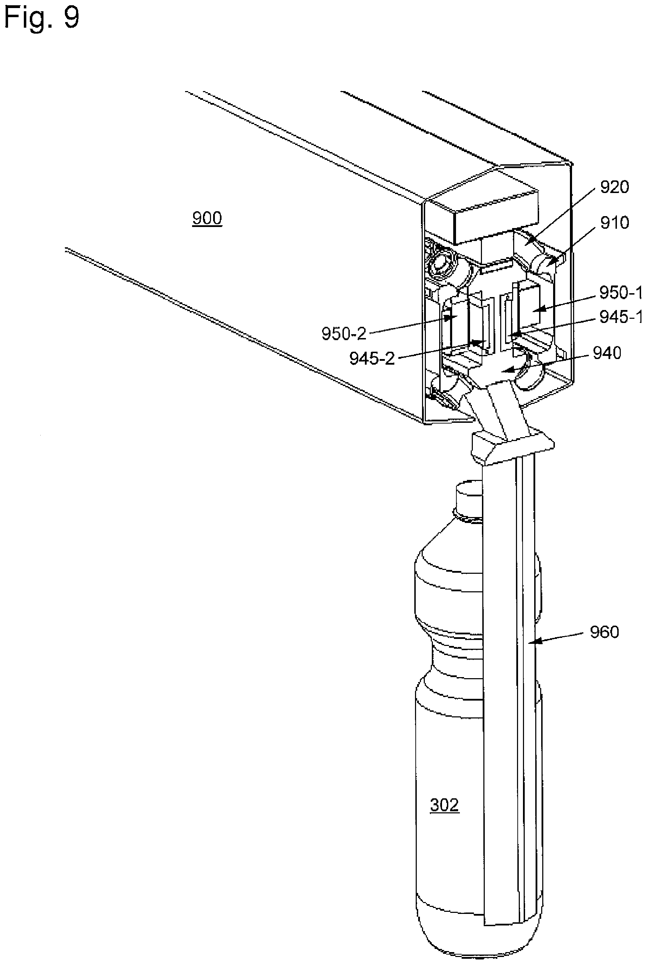

Das Führungselement 222 ist in der hier dargestellten exemplarischen Ausführung in Form eines Anschlagbalkens 226 ausgebildet, an dem ein Drehriegel 227 angeordnet ist, der beispielsweise durch an der Transportbahn angeordnete Nocken geschaltet werden kann. In der dargestellten, nicht limitierenden Weiterbildung ist der Drehriegel 227 mit dem Anschlagbalken 226 verbunden, wobei der Drehriegel 227 drehbar an dem Anschlagbalken gelagert sein kann. Alternativ kann der Drehriegel 227 über ein um seine Längsachse drehbares Element, insbesondere den Anschlagbalken 226 selbst, mit dem Fördermittel verbunden sein. Eine Vielzahl alternativer Weiterbildungen des Führungselements 222, wie beispielsweise das in Figur 9 gezeigte Schubelement, ist je nach Ausbildung der Behälter und der Transferfördereinrichtung denkbar. Zusätzlich kann das Führungselement wie hier dargestellt längenverfahrbar über eine Halterung 260 an dem Fördermittel 200 befestigt sein, wobei beispielsweise ein von einem Servomotor (nicht dargestellt) angetriebenes Zahnrad 270 in eine Zahnstange des Förderelements eingreift. Eine Vielzahl alternativer Ausführungen zum seitlichen Verfahren des Führungselements 222 ist dabei denkbar. Beispielsweise kann das Führungselement 222 mittels eines federelastischen Elements an dem Fördermittel 200 befestigt sein. Durch Änderung der Länge des Führungselements kann die erfindungsgemäße Vorrichtung auf Behälter unterschiedlicher Größen eingestellt werden. Der Antrieb des hier dargestellten passiven Fördermittels geschieht durch magnetische Wechselwirkung zwischen dem Reaktionselement 230 des Fördermittels und einer Vielzahl elektrischer Wicklungen 250 entlang der Transportbahn. Dabei können die elektrischen Wicklungen 250 mittels einer Steuer- und/oder Regeleinrichtung (nicht dargestellt) individuell angesteuert und als Elektromagnete einzeln umgepolt werden. Durch Wechselwirkung der Magnetfelder der Elektromagnete mit dem hier dargestellten Permanentmagneten des Fördermittels erfährt das Fördermittel eine Kraftwirkung, welche bei geeigneter Steuerung der Elektromagnete 250 zu einer Beschleunigung, Abbremsung oder konstanten Bewegung des Fördermittels entlang der Führungsschiene 240 führt. Das hier dargestellte Reaktionselement 230 des Fördermittels besteht exemplarisch aus drei alternierend und senkrecht zur Führungsschiene angeordneten Permanentmagneten. Eine Vielzahl alternativer Ausbildung des Reaktionselements 230 ist hierbei denkbar. Wie in der exemplarischen Weiterbildung dargestellt, kann beispielsweise die Breite des mittleren Permanentmagneten in etwa dem Abstand zweier benachbarter elektrischer Wicklungen der Transportbahn entsprechen und die Breite der äußeren Permanentmagnete etwa jeweils der Hälfte des Abstands der benachbarten elektrischen Wicklungen entsprechen. Bei alternierender Polung benachbarter Elektromagnete in der Transportbahn kann somit eine maximale Kraft auf das Reaktionselement entlang der Führungsschiene ausgeübt werden. Durch individuelles Ansteuern der Elektromagnete 250 kann das Förderelement 200 mit der von einer Steuer- und/oder Regeleinheit der Transporteinrichtung vorgegebenen Geschwindigkeit V entlang der Führungsschiene 240 bewegt werden. Insbesondere können eine Vielzahl von Fördermitteln derart gesteuert entlang der Führungsschienen bewegt werden, dass die von ihnen getragenen Führungselemente einzelne Behälter aus dem Einlaufstrom aufnehmen und gezielt zu den gewünschten Förderspuren führen.

Wie in Figur 1 dargestellt, umfasst die Transferfördereinrichtung neben der Teilstrecke 123 für die Übernahme der Behälter eine Transferstrecke bzw. Transportstrecke 124, entlang derer die Behälter gezielt auf die Förderspuren der Auslauffördereinrichtung 140 verteilt werden, und eine Rückführstrecke 125, entlang derer die Führungselemente 122 zu der Teilstrecke 123 zurückgeführt werden. Wie bereits erwähnt kann diese Rückführstrecke 125, selbst wenn die Teilstrecke 123 und die Transferstrecke 124 mit einem Linearmotorantrieb ausgestattet sind, mit einem kontinuierlichen Antrieb, beispielsweise einem Riemen- oder Kettenantrieb, ausgestattet sein, um Installations- und Betriebskosten zu sparen.

An dem Übernahmepunkt A werden die Behälter von dem Einlaufstrom 102 durch die Führungselemente 122 der Transferfördereinrichtung übernommen. Dies bedeutet, dass die Führungselemente die Kontrolle über die Geschwindigkeit und/oder die Richtung des Transports der Behälter ab diesem Punkt übernehmen, welche zuvor durch das Transportband 101 der Einlauffördereinrichtung 100 bestimmt wurden. Dies kann beispielsweise, wie exemplarisch in den Figuren 1 und 3 dargestellt, durch Verriegeln des Führungselements 122 geschehen, so dass die Transportgeschwindigkeit der übernommenen Behälter von der Transferfördereinrichtung bestimmt wird. Der Übernahmepunkt kann jedoch auch erst weiter stromabwärts der Einlauffördereinrichtung 100 vorgesehen sein. In beiden Fällen werden die Behälter von den Führungselementen 122 in der dargestellten Weiterbildung von dem Transportband 101 über einen Überschub 105, beispielsweise in Form eines Überschubbleches, auf die Transportbänder der Auslauffördereinrichtung 140 geschoben. Die Relativgeschwindigkeit der Transportbänder der Auslauffördereinrichtung 140 in Bezug auf die Umlaufgeschwindigkeit der Führungselemente 122 kann derart gewählt werden, dass auf den Transportbändern stehende Behälter gegen die Anschlagplatten der Führungselemente gedrückt werden. Somit kann über das gezielte Öffnen des Drehriegels der Führungselemente bestimmt werden, an welcher Position B der jeweilige Behälter an den Auslaufstrom übergeben wird.

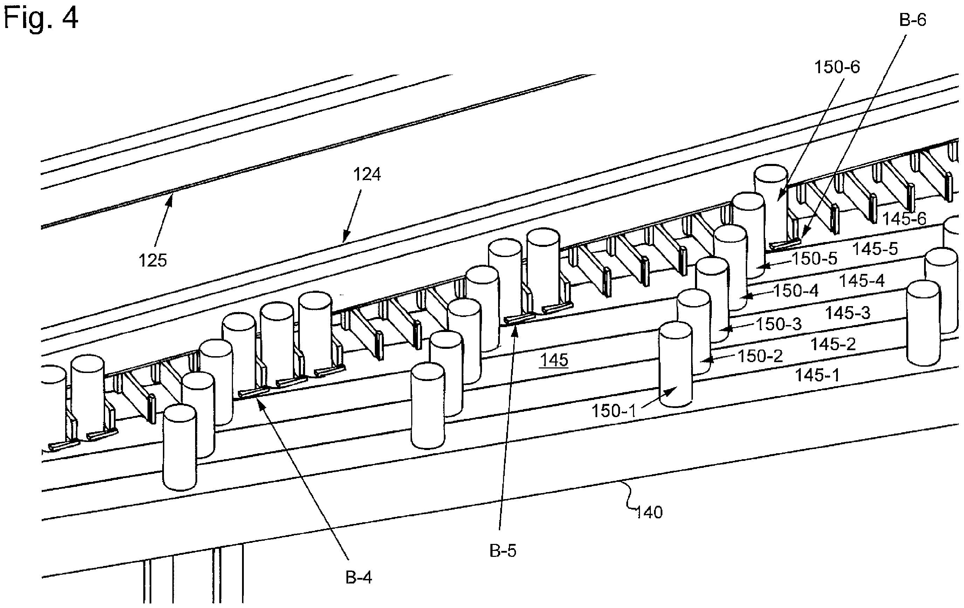

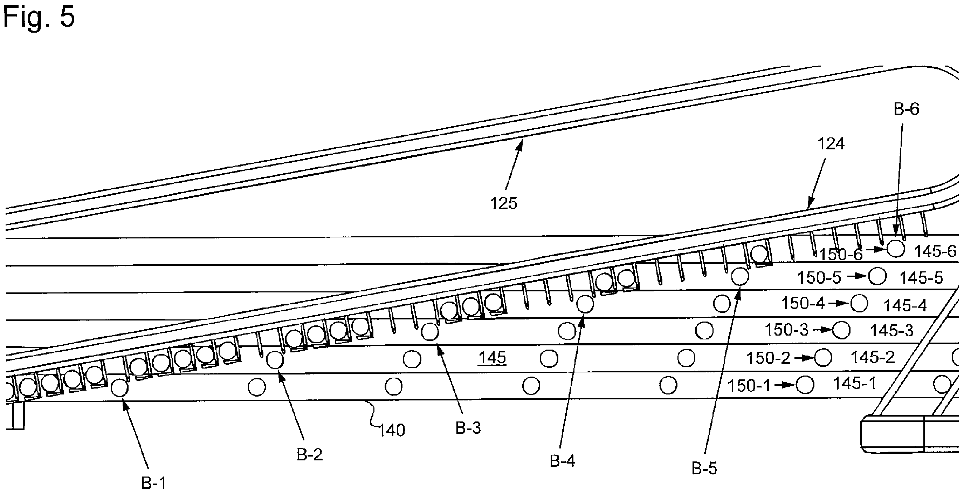

Dieser Vorgang ist in den Figuren 4 und 5 genauer dargestellt, wobei Figur 4 eine perspektivische Ansicht und Figur 5 eine Draufsicht der Transferstrecke 124 zeigen. In der hier dargestellten nicht limitierenden Weiterbildung weist die Auslauffördereinrichtung 140 sechs parallel zueinander angeordnete Förderspuren 145-1 bis 145-6 auf. Diese Förderspuren können dabei durch separate Transportbänder gebildet werden, welche nebeneinander ohne Trennelemente in einer Ebene verlaufen, oder als Förderspuren auf einem gemeinsamen Transportband 145 vorgesehen sein. Es versteht sich, dass auch andere Anzahlen von Förderspuren möglich sind, je nachdem welche Gebindegrößen gewünscht sind. Auch können die Behälter auf weniger als die maximal möglichen Förderspuren verteilt werden, indem die Drehriegel der Führungselemente nur an den entsprechenden Positionen geöffnet werden. Ebenso ist bei einem gemeinsamen Transportband 145 auch eine Variation des seitlichen Abstandes der Förderspuren durch Anpassen der Positionen, an denen die Drehriegel geöffnet werden, denkbar. Dazu bietet sich ein elektrisch schaltbarer Verriegelungsmechanismus der Führungselemente an. Alternativ können die Drehriegel auch durch schaltbare Nocken an den Übergabepositionen (nicht dargestellt) geöffnet werden.

In der hier dargestellten Weiterbildung werden jeweils Sechsergruppen von Behältern auf die sechs Förderspuren 145-1 bis 145-6 verteilt. Dies geschieht, indem die entsprechenden Drehriegel an den entsprechenden Übergabepositionen B-1 bis B-6 geöffnet werden, sodass die Behälter 150-1 bis 150-6 von den Führungselementen freigegeben werden. In der hier dargestellten Weiterbildung gehören das Transportband bzw. die Transportbänder 145 zu der Auslauffördereinrichtung 140. Die Transferfördereinrichtung 120 kann jedoch auch über eigene Transportbänder verfügen, die die verteilten Behälter anschließend an die Auslauffördereinrichtung 140 übergeben.

Wie in Figur 5 zu sehen, ist die Transferstrecke 124 der Transferfördereinrichtung unter einem spitzen Winkel α schräg zur Richtung der Förderspuren angeordnet. Dabei ist der Winkel größer als 0° und kleiner als 90°, damit die Behälter quer über die Förderspuren 145-1 bis 145-6 geführt werden können. Ebenso ist aus der Figur 5 zu erkennen, dass die dort gewählte Anordnung der Transferstrecke 124 zu einem Längsversatz der übergebenen Behälter 150-1 bis 150-6 in Förderrichtung führt, welcher durch die anschließende Gruppiervorrichtung 160 korrigiert werden muss. Geht man von einer konstanten Geschwindigkeit *vₐᵤₛ* der Behälter entlang der Förderspuren 145-1 bis 145-6 und einer konstanten Geschwindigkeit *vₜᵣₐₙₛ* der Führungselemente 122 entlang der Transferstrecke 124 aus, so kann bei Anordnung der Transferstrecke unter einem Winkel a, der der Formel cos*α*= *vₐᵤₛ* / *vₜᵣₐₙₛ* genügt, bewirkt werden, dass die Behälter 150-1 bis 150-6 bereits in einer Linie senkrecht zur Förderrichtung an die Förderspuren übergeben werden. In diesem Fall kann auf die weiter unten beschriebene Gruppiervorrichtung verzichtet werden. Bei separat vorgesehenen Transportbändern 145 für die Förderspuren 145-1 bis 145-6 kann auch ohne die oben beschriebene spezielle Wahl des Winkels auf die weiter unten beschriebene Gruppiervorrichtung verzichtet werden, wenn die einzelnen Transportbänder derart unterschiedlich schnell angetrieben werden, dass der bei der Übergabe der Behälter entstehende Längsversatz bis zum Ende der Transportbänder wieder ausgeglichen wird. Beispielsweise müsste das der Förderspur 150-1 zugeordnete Transportband 145-1 mit einer entsprechend höheren Geschwindigkeit als das der Förderspur 150-6 zugeordnete Transportband 145-6 angetrieben werden. Die Geschwindigkeiten der Transportbänder, auch der Einlauffördereinrichtung 100, und der Führungselemente können von einer Steuer- und/oder Regeleinheit (nicht dargestellt) geregelt werden. Bei Verwendung eines Linearmotorantriebs für die Transferfördereinrichtung können bereits mit Behältern bestückte Führungselemente solange verzögert werden, bis eine nachfolgende Lücke im Einlaufstrom zugefahren ist.

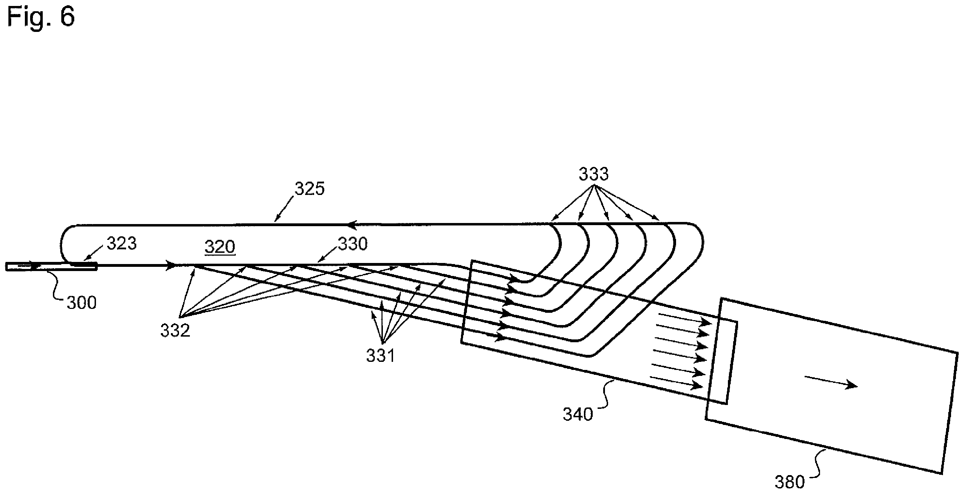

Figur 6 stellt schematisch eine alternative Vorrichtung zum Verteilen und Gruppieren von Behältern mit einer fächerartigen Transferfördereinrichtung gemäß der vorliegenden Erfindung dar. In dieser Weiterbildung umfasst die Vorrichtung neben der Einlauffördereinrichtung 300 und der Auslauffördereinrichtung 340 eine fächerartige Transferfördereinrichtung 320, welche eine Vielzahl von einzeln und unabhängig voneinander bewegbaren Fördermitteln mittels eines Langstator-Linearmotorantriebs antreibt. In der hier gezeigten Transferfördereinrichtung werden die Behälter über gezieltes Ausleiten der jeweiligen die Behälter führenden Fördermittel über Weichen 332 auf Nebenstrecken 331 zu den gewünschten Förderspuren der Auslauffördereinrichtung 340 verteilt. Dazu umfasst der Linearmotorantrieb der Transferfördereinrichtung 320 neben der Hauptstrecke 330, die ebenfalls einer auslaufenden Förderspur zugeordnet ist, eine Reihe von Nebenstrecken 331, die jeweils einer auslaufenden Förderspur zugeordnet sind. Die Nebenstrecken 331 sind dabei mit der Hauptstrecke 330 über steuerbare Weichen 332 zum gezielten Ausleiten der Fördermittel und über Weichen 333 zum Wiedereinleiten der Fördermittel verbunden. Entlang einer Rückführstrecke 325 werden die wieder eingeleiteten Fördermittel zurück zur Teilstrecke 323 geleitet, wo sie neue Behälter aus dem Einlaufstrom der Behälter übernehmen.

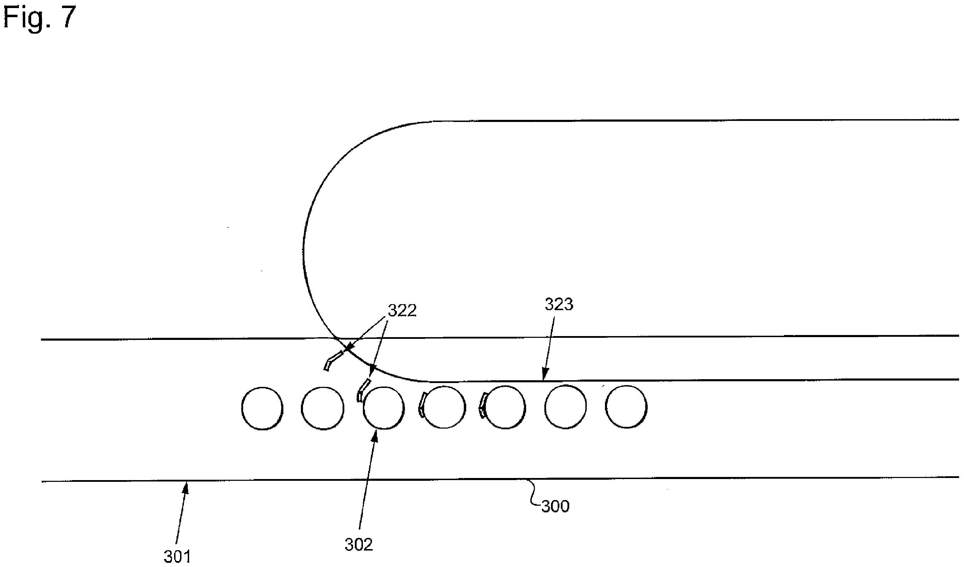

Die Übernahme von Behältern 302 aus dem Einlaufstrom ist im Detail in der Figur 7 gezeigt. Wie schon in der in der Figur 3 gezeigten Weiterbildung werden auch die Führungselemente 322 durch Bewegen entlang der Teilstrecke 323 an den Einlaufstrom der Behälter 302, die von einem Transportband 301 der Einlauffördereinrichtung 300 bewegt werden, kontinuierlich derart angenähert, dass sie in mechanischen Kontakt mit den Behältern gebracht werden. Von den Fördermitteln und den mit ihnen verbundenen Führungselementen ist in der gezeigten schematischen Darstellung lediglich das Schubelement 322 gezeigt.

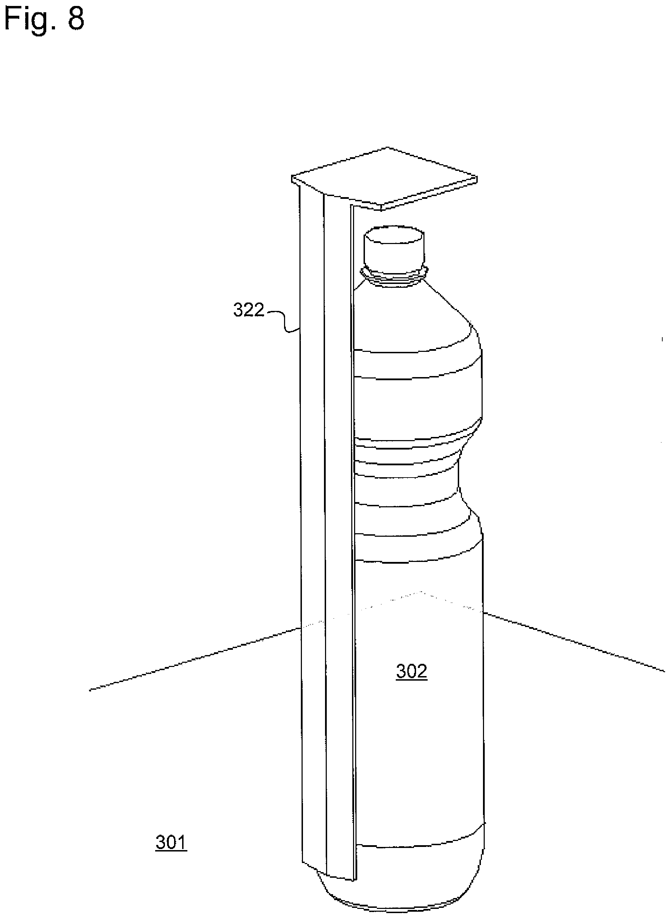

Eine beispielhafte Ausführung der Führungselemente findet sich in der Figur 8. Das Schubelement 322 ist als ausgedehntes und gewinkeltes Element gezeigt, welches in flächigen mechanischen Kontakt mit dem Behälter 302, der hier exemplarisch als Flasche dargestellt ist, gebracht werden kann. Durch Antreiben des das Schubelement tragenden Fördermittels kann der Behälter 302 dann gezielt über eine Förderfläche 301, beispielsweise ein Überschubblech oder ein Transportband, geschoben werden.

Die Schubelemente 322 können durch gesteuertes Bewegen der Fördermittel mittels des Linearmotorantriebs derart relativ zu dem Einlaufstrom der Behälter 302 bewegt werden, dass die Schubelemente gezielt in den Einlaufstrom eingeführt werden und in mechanischen Kontakt mit den stromabwärts gelegenen Behälterseiten gebracht werden können. Die Schubelemente können wie in der Figur gezeigt gewinkelt ausgebildet sein, um ein seitenstabiles Führen der Behälter zu ermöglichen.

In der Figur 9 ist eine perspektivische Darstellung eines exemplarischen Langstator-Linearmotorantriebs 900 für das Schubelement der Figur 8 gezeigt. Das den Behälter 302 schiebende Schubelement 960 ist an einem Fördermittel 940 befestigt, das als Schlitten bzw. Läufer ausgebildet ist. Das Fördermittel 940 ist dabei über Rollen 920 an Schienen 910 des Linearmotorantriebs gelagert, welche mit individuell ansteuerbaren Langstatoren 950-1 und 950-2 ausgestattet sind. Entsprechend verfügt das Fördermittel 940 über korrespondierende magnetische Reaktionselemente 945-1 und 945-2, welche wie oben beschrieben insbesondere als Permanentmagnete oder nicht schaltende Elektromagnete ausgebildet sein können. Durch Steuern und/oder Regeln der Stromstärke in den elektrischen Wicklungen der Langstatoren 950-1 und 950-2 können die Fördermittel gezielt und unabhängig voneinander mit individuellen Weg-Zeit-Profilen bewegt werden. Eine Steuer- und/oder Regeleinheit (nicht dargestellt) kann dabei die Bewegung der Fördermittel und die Geschwindigkeiten der Transportbänder der Einlauf- und Auslauffördereinrichtungen steuern. Darüber hinaus kann die Steuer- und/oder Regeleinheit die Weichen 332 der Transferfördereinrichtung derart schalten, dass die von den Schubelementen 322 geschobenen Behälter auf die auslaufenden Förderspuren verteilt werden.

Auch in der Figur 6 sind die Hauptstrecke 330 der Transferfördereinrichtung 320 und die auslaufenden Förderspuren der Auslauffördereinrichtung 340 unter einem spitzen Winkel angeordnet. Aufgrund der Flexibilität des verwendeten Linearmotorantriebs ist dies jedoch nicht zwingend erforderlich. Stattdessen können auch die Nebenstrecken 331 entsprechend gekrümmt ausgebildet sein. In der hier dargestellten Weiterbildung ist zwischen der Einlauffördereinrichtung 300 und der Auslauffördereinrichtung 340 bevorzugt ein Überschubblech (nicht dargestellt) angeordnet. Stattdessen kann die Auslauffördereinrichtung jedoch auch in den Bereich der Weichen 332 verlängert werden, äquivalent zu der Anordnung in Figur 1. Eine Vielzahl alternativer Weiterbildungen ist denkbar.

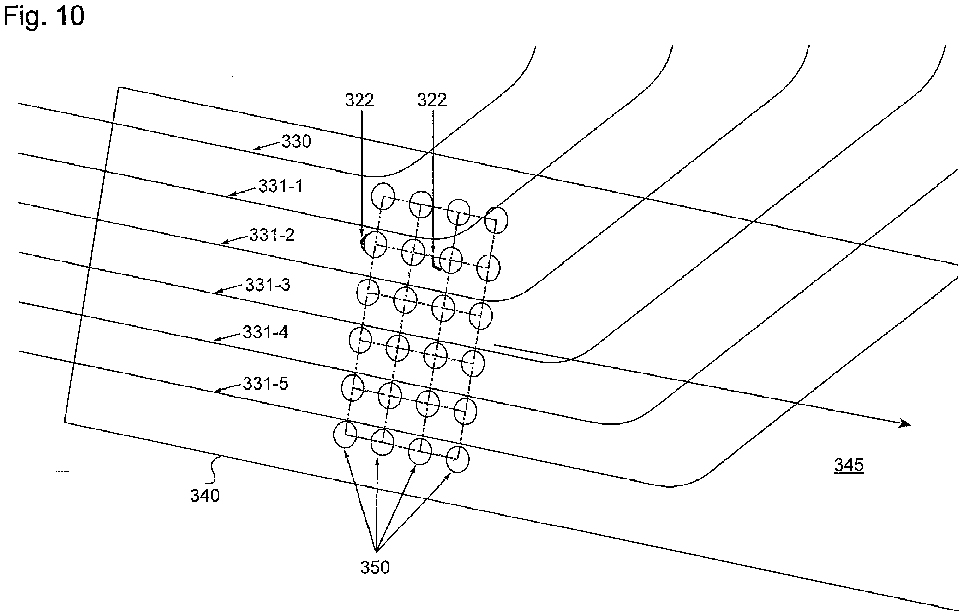

Da die Fördermittel mittels des Linearmotorantriebs auch entlang der Nebenstrecken 331 unabhängig voneinander bewegt werden können, können die Geschwindigkeiten der Fördermittel derart gewählt werden, dass die mitgeführten Behälter bereits gruppiert an die Auslauffördereinrichtung übergeben werden, so wie es beispielsweise in der Figur 10 gezeigt ist. In dieser Figur ist ein Block von Behältern 350 gezeigt, der von den Fördermitteln mit ihren Führungselementen 322 über die Hauptstrecke 330 bzw. die Nebenstrecken 331-1 bis 331-5 zu dem Transportband 345 der Auslauffördereinrichtung 340 geführt wurden. Die Anordnung der Nebenstrecken 331-1 bis 331-5 in Relation zum Transportband 345 kann, insbesondere durch geeignete Krümmung der Nebenstrecken, derart gewählt werden, dass die Führungselemente 322 durch die Zwischenräumen zwischen den Behältern 350 des Blocks aus diesem Block herausgefahren werden können. Hierzu ist insbesondere eine individuelle Ansteuerung der Fördermittel, wie sie bei einem Linearmotorantrieb möglich ist, von Vorteil. Anders als in der Weiterbildung der Figur 1 können aufeinanderfolgende Reihen von Behältern 350 bereits in der Transferfördereinrichtung 320 durch entsprechend schnelles Nachführen der nachfolgenden Behälter zu einem Block von Behältern vorgruppiert werden, welcher beispielsweise von einem nachgeordneten Einwegpacker 380 zu einem Gebinde von Behältern zusammengefasst werden kann. Dadurch entfällt die Notwendigkeit für eine nachfolgende Verdichtung der gebildeten Gruppen von Behältern. Auch die nachfolgend beschriebene Gruppiervorrichtung wird nicht benötigt.

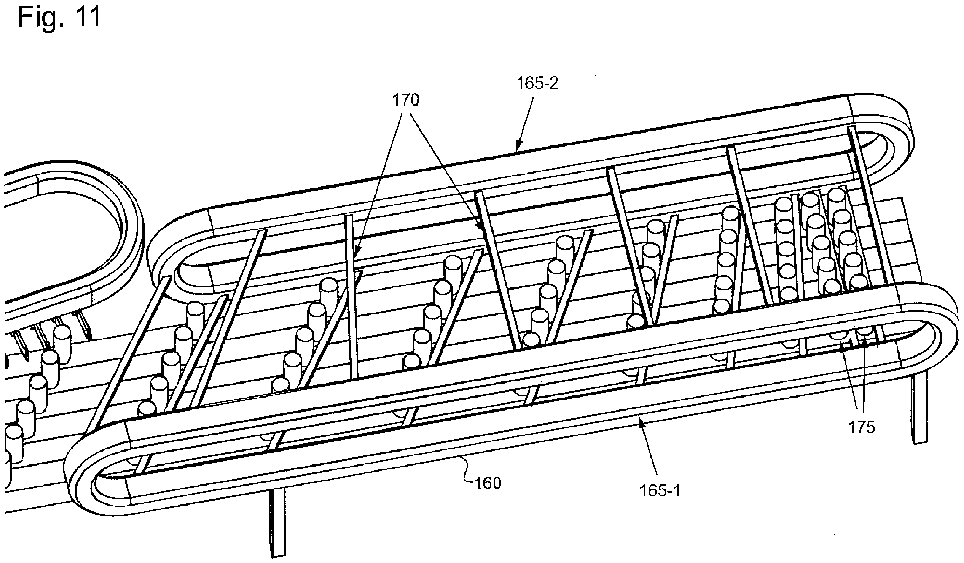

Die Figur 11 schließlich zeigt eine Gruppiervorrichtung 160 für die Behälter gemäß der vorliegenden Erfindung, welche wie in Figur 1 gezeigt als Teil der Auslauffördereinrichtung 140 ausgebildet sein kann. In der dargestellten Weiterbildung sind links und rechts von dem Transportband bzw. den Transportbändern der Auslauffördereinrichtung 140 im Wesentlichen parallel zueinander angeordnete Linearmotorantriebe 165-1 und 165-2 angeordnet, entlang derer eine Vielzahl von einzeln und unabhängig voneinander bewegbaren Fördermitteln umlaufen, die jeweils paarweise über Querelemente 170 miteinander verbunden sind. Zum Gruppieren der auf den Förderspuren transportierten Behälter können die Paare von Fördermitteln derart gesteuert bewegt werden, dass der Anlaufbalken 170 vor den auszurichtenden Behältern platziert wird, wobei durch unterschiedlich schnelle Bewegung der beiden jeweiligen Fördermittel eine Schrägstellung des Anlaufbalkens entsprechend dem Längsversatz der Behälter erreicht werden kann. Anschließend wird das Paar von Fördermitteln mit einer geringeren Geschwindigkeit als die Behälter bewegt, sodass diese gegen den Anlaufbalken anlaufen. Indem nun das vorauseilende Fördermittel des Paares langsamer bewegt wird als das jeweils andere Fördermittel wird der Anlaufbalken allmählich senkrecht zur Förderrichtung ausgerichtet, wobei die vorauseilenden Behälter abgebremst werden. Schlussendlich ergibt sich dadurch eine Vorgruppierung der Behälter in Linien 175 senkrecht zur Förderrichtung, die anschließend z.B. an eine Schubbalkenkette eines Einwegpackers zur exakten Bildung der Gebindeformation weitergegeben werden kann. Die nicht mehr benötigten Anlaufbalken 170 werden mit den Fördermitteln nach oben weggefahren und über die Rückführstrecke zurück zum Anfang der Gruppiervorrichtung bewegt.

Die beschriebenen Weiterbildungen erlauben das zuverlässige und flexible Verteilen eines einspurigen Behälterstroms auf einen mehrspurigen Auslaufstrom, wobei eine Vielzahl von unterschiedlichen Behältertypen und -großen ohne Austausch von Formatteilen behandelt werden können. Eine nachgeordnete Gruppiervorrichtung kann die verteilten Behälter in Reihen ausrichten und zur Verpackung in Gebinden vorbereiten.

## Patentansprüche

1. Vorrichtung zum Verteilen und Gruppieren von Behältern in einer Behälterbehandlungsanlage, umfassend:
eine Einlauffördereinrichtung (100, 300), die dazu ausgebildet ist, eine Vielzahl von Behältern (102, 302) in einem einspurigen Einlaufstrom zu fördern und wobei die Einlauffördereinrichtung (100, 300) ein Transportband (101, 301) zum einspurigen Transport der Behälter aufweist, wobei die Behälter stehend auf dem Transportband befördert werden;
eine Auslauffördereinrichtung (140, 340), die dazu ausgebildet ist, die Behälter mehrspurig abzufördern; und
eine der Einlauf- und der Auslauffördereinrichtung zugeordnete Transferfördereinrichtung (120, 320) mit einer Vielzahl umlaufender Führungselemente (122, 222, 322, 960) für die Behälter;
wobei die Transferfördereinrichtung (120, 320) einen Langstator-Linearmotorantrieb (250, 900) mit einer Vielzahl von einzeln und unabhängig voneinander bewegbaren Fördermitteln (200, 940), an denen die Führungselemente (122, 222, 322, 960) angeordnet sind, umfasst;
wobei die Transferfördereinrichtung (120, 320) dazu ausgebildet ist, die Behälter stehend durch gezieltes Führen, insbesondere durch Vorschieben und/oder Abbremsen, mittels der umlaufenden Führungselemente (122, 222, 322, 960) von dem einspurigen Einlaufstrom auf den mehrspurigen Auslaufstrom aufzuteilen; und
wobei die Transferfördereinrichtung (120, 320) weiterhin wenigstens eine Teilstrecke (124, 330) aufweist, die die Auslauffördereinrichtung (140, 340) unter einem Winkel α kreuzt, der kleiner als 90° und größer als 0° ist;
**dadurch gekennzeichnet, dass**
die Transferfördereinrichtung (120, 320) eine weitere Teilstrecke (123, 323) umfasst, entlang derer die umlaufenden Führungselemente (122, 222, 322, 960) synchron mit den auf dem Transportband (101,301) stehenden Behältern (102, 302) im Einlaufstrom bewegt werden, und die derart angeordnet ist, dass sich die weitere Teilstrecke (123, 323) dem Transportband (101, 301) der Einlauffördereinrichtung (100, 300) kontinuierlich so annähert, dass die umlaufenden Führungselemente (122, 222, 322, 960) jeweils zwischen zwei aufeinanderfolgende Behälter im Einlaufstrom eintauchen und in mechanischen Kontakt mit den Behältern (102, 302) im Einlaufstrom gebracht werden können, sodass die Transferfördereinrichtung (120, 320) die Kontrolle über den Transport der Behälter, insbesondere deren Geschwindigkeit, übernimmt,.

2. Vorrichtung nach Anspruch 1, wobei die Auslauffördereinrichtung (140, 340) wenigstens ein Transportband (145), insbesondere eine Vielzahl von parallel zueinander angeordneten Transportbändern (145-1 - 145-6) zum mehrspurigen Transport von Behältern aufweist.

3. Vorrichtung nach Anspruch 1 oder 2, wobei die Führungselemente (122, 222) je wenigstens ein, insbesondere gesteuert verriegelbares und/oder gesteuert entriegelbares Anschlagelement (126, 226) aufweisen, das derart ausgebildet ist, dass es über mechanischen Eingriff mit wenigstens einem Behälter (102) zum Abbremsen dieses Behälters verwendet werden kann.

4. Vorrichtung nach Anspruch 1 oder 2, wobei die Führungselemente (322) je wenigstens ein Schubelement (200, 960) aufweisen, das derart ausgebildet ist, dass es über mechanischen Eingriff mit wenigstens einem Behälter (302) zum seitenstabilen Vorschieben dieses Behälters verwendet werden kann.

5. Vorrichtung nach Anspruch 4, wobei die Transferfördereinrichtung (320) weiterhin eine Vielzahl von steuerbaren Weichen (332) aufweist, die eine Hauptstrecke (330) der Transferfördereinrichtung mit einer Vielzahl den auslaufenden Behälterspuren zugeordneter Nebenstrecken (331) verbindet.

6. Vorrichtung nach einem der vorhergehenden Ansprüche, wobei der Winkel α in etwa durch die Formel cos*α* = *vₐᵤₛ*/*vₜᵣₐₙₛ* mit einer konstanten Fördergeschwindigkeit *vₐᵤₛ* der Behälter im Auslaufstrom und einer konstanten Fördergeschwindigkeit *vₜᵣₐₙₛ* der Behälter entlang der Teilstrecke (124) der Transferfördereinrichtung gegeben ist.

7. Vorrichtung nach einem der vorhergehenden Ansprüche, wobei die Auslauffördereinrichtung (140, 160; 340) weiterhin ein Paar parallel angeordneter Langstator-Linearmotorantriebe (165-1, 165-2) mit einer Vielzahl von paarweise durch ein Querelement (170), insbesondere einen Anlaufbalken miteinander verbundenen Fördermitteln umfasst.

8. Verfahren zum Verteilen und Gruppieren von Behältern in einer Behälterbehandlungsanlage, umfassend die Schritte:
einspuriges Zufördern einer Vielzahl von Behältern (102, 302) zu einer Transferfördereinrichtung (120, 320) mittels eines Transportbandes (101, 301) einer Einlauffördereinrichtung (100, 300), wobei die Behälter stehend auf dem Transportband befördert werden;
mehrspuriges Abfördern der Behälter von der Transferfördereinrichtung (120, 320); und
Verteilen der Behälter von dem einspurigen Einlaufstrom auf den mehrspurigen Auslaufstrom mittels der Transferfördereinrichtung (120, 320);
wobei die Behälter (102, 302) mittels eines Langstator-Linearmotorantriebs (250, 900) mit einer Vielzahl von einzeln und unabhängig voneinander bewegbaren Fördermitteln (200, 940) verteilt werden;
wobei das Verteilen der Behälter durch gezieltes Führen, insbesondere durch Vorschieben und/oder Abbremsen, der stehend transportierten Behälter mittels einer Vielzahl umlaufender Führungselemente (122, 222, 322) der Transferfördereinrichtung, die an den Fördermitteln (200, 940) angeordnet sind, erfolgt;
wobei die Behälter von der Transferförderrichtung (120, 320) zum Verteilen der Behälter entlang einer Teilstrecke (124, 330) der Transferfördereinrichtung (120, 320) bewegt werden, die die auslaufenden Behälterspuren unter einem Winkel α kreuzt, der kleiner als 90° und größer als 0° ist; und
wobei die Fördermittel (200, 940) entlang einer weiteren Teilstrecke (123, 323) der Transferfördereinrichtung (120, 320) synchron mit den Behältern (102, 302) im Einlaufstrom bewegt werden;
**dadurch gekennzeichnet, dass**
die weitere Teilstrecke (123, 323) derart angeordnet ist, dass sich die Fördermittel (200, 940) dem Einlaufstrom kontinuierlich so annähern, dass die Führungselemente (122, 222, 322, 960) jeweils zwischen zwei aufeinanderfolgende Behälter im Einlaufstrom eintauchen und in mechanischen Kontakt mit den Behältern (102, 302) im Einlaufstrom gebracht werden, sodass die Transferfördereinrichtung (120, 320) die Kontrolle über den Transport der Behälter, insbesondere deren Geschwindigkeit, übernimmt.

9. Verfahren nach Anspruch 8, wobei die Behälter (102, 302) bei Übernahme der Behälter von dem Einlaufstrom durch die Transfereinrichtung vereinzelt werden.

10. Verfahren nach Anspruch 8 oder 9, wobei die Behälter über mechanischen Eingriff wenigstens eines, insbesondere gesteuert verriegelbaren und/oder gesteuert entriegelbaren Anschlagelements (126, 226) der Führungselemente (122, 222) abgebremst und/oder über mechanischen Eingriff wenigstens eines Schubelements (960) der Führungselemente (322) vorgeschoben werden.

11. Verfahren nach Anspruch 10, wobei einige oder alle Fördermittel über eine Vielzahl von steuerbaren Weichen (332) von einer Hauptstrecke (330) der Transferfördereinrichtung (320) auf eine Vielzahl den auslaufenden Behälterspuren zugeordneter Nebenstrecken (331) ausgeleitet werden.

12. Verfahren nach einem der Ansprüche 8 bis 11, wobei der Winkel α in etwa durch die Formel cosa = *vₐᵤₛ*/*vₜᵣₐₙₛ* mit einer konstanten Fördergeschwindigkeit *vₐᵤₛ* der Behälter im Auslaufstrom und einer konstanten Fördergeschwindigkeit *vₜᵣₐₙₛ* der Behälter entlang der Teilstrecke (124) der Transferfördereinrichtung gegeben ist.

13. Verfahren nach einem der Ansprüche 8 bis 12, wobei die mehrspurig auslaufenden Behälter mittels eines Paares parallel angeordneter Langstator-Linearmotorantriebe (165-1, 165-2) mit einer Vielzahl von paarweise durch ein Querelement (170), insbesondere einen Anlaufbalken miteinander verbundenen Fördermitteln vorzugsweise senkrecht zur Transportbahn ausgerichtet und/oder verzögert und/oder gepuffert und/oder gruppiert werden.

## Claims

1. Device for distributing and grouping containers in a container treatment assembly, comprising:
an infeed conveyor (100, 300) which is configured to convey a plurality of containers (102, 302) in a single-lane infeed flow and wherein the infeed conveyor (100, 300) comprises a conveyor belt (101, 301) for single-lane transportation of the containers, where the containers are conveyed in a standing position on the conveyor belt;
an outfeed conveyor (140, 340) which is configured to convey the containers away in multiple outfeed container lanes; and
a transfer conveyor (120, 320) associated with the infeed and the outfeed conveyor and having a plurality of circulating guide elements (122, 222, 322, 960) for the containers;
where the transfer conveyor (120, 320) comprises a long-stator linear motor drive (250, 900) with a plurality of individually and independently movable conveying devices (200, 940), to which the guide elements (122, 222, 322, 960) are attached;
where the transfer conveyor (120, 320) being adapted to separate the containers in a standing position by way of the circulating guide elements (122, 222, 322, 960) from the single-lane infeed flow to the multi-lane outfeed flow by selective guiding, in particular, by pushing them forward and/or decelerating them; and
where the transfer conveyor (120, 320) further comprises at least one section (124, 330) of the path which intersects the outfeed conveyor (140, 340) at an angle α which is smaller than 90° and greater than 0°;
**characterized in that**
the transfer conveyor (120, 320) comprises a further section (123, 323) of the path along which the circulating guide elements (122, 222, 322, 960) are moved in synchronism with the containers (102, 302) in the standing position on the conveyor belt (101, 301) in the infeed flow, and being arranged such that the further section (123, 323) of the path continuously approaches the transport track (101, 301) of the infeed conveyor (100, 300) where the circulating guide elements (122, 222, 322, 960) each immerse between two successive containers in the infeed flow and are made to mechanically contact the containers (102, 302) in the infeed flow, so that the transfer conveyor (120, 320) assumes control over transporting the containers, in particular their speed.

2. Device according to claim 1, where the outfeed conveyor (140, 340) comprises at least one conveyor belt (145), in particular a plurality of conveyor belts (145-1 -145-6) arranged in parallel for multi-lane transportation of containers.

3. Device according to claim 1 or 2, where the guide elements (122, 222) each have at least one, in particular controllably lockable and/or controllably unlockable stop element (126, 226) which is adapted such that it can by mechanical engagement with at least one container (102) be used for decelerating the container.

4. Device according to claim 1 or 2, where the guide elements (322) each comprise at least one push element (200, 960) which is configured such that it can by mechanical engagement with at least one container (302) be used to push forward the container in a laterally stable manner.

5. Device according to claim 4, where the transfer conveyor (320) further comprises a plurality of controllable track switches (332) connecting a main line (330) of the transfer conveyor to a plurality of branch lines (331) associated with the outfeed container lanes.

6. Device according to one of the preceding claims, where the angle α is represented approximately by the formula cos*α* = *vₒᵤₜ*/*vₜᵣₐₙₛ* with a uniform conveying speed *vₒᵤₜ* of the containers in the outfeed flow and a uniform conveying speed *vₜᵣₐₙₛ* of the containers along the section (124) of the path of the transfer conveyor.

7. Device according to one of the preceding claims, where the outfeed conveyor (140, 160; 340) further comprises a pair of long-stator linear motor drives (165-1, 165-2) arranged parallel to each other with a plurality of conveying devices connected to each other in pairs by a cross member (170), in particular an impact bar.

8. Method for distributing and grouping containers in a container treatment assembly, comprising the steps of:
supplying a plurality of containers (102, 302) in a single lane to a transfer conveyor (120, 320) by way of a conveyor belt (101, 301) of an infeed conveyor (100, 300), where the containers are conveyed in a standing position on the conveyor belt;
conveying away the containers from the transfer conveyor (120, 320) in multiple lanes; and
distributing the containers from the single-lane infeed flow to the multi-lane outfeed flow by way of the transfer conveyor (120, 320)
where the containers (102, 302) are distributed by way of a long-stator linear motor drive (250, 900) with a plurality of individually and independently movable conveying devices (200, 940);
where distributing the containers is effected by selective guiding, in particular by pushing them forward and/or decelerating the containers transported in a standing position by way of a plurality of circulating guide elements (122, 222, 322) of the transfer conveyor attached to the conveying devices (200, 940);
where the containers are moved by the transfer conveyor (120, 320) for distributing the containers along a section (124, 330) of the path of the transfer conveyor (120, 320) which intersects the outfeed container lanes at an angle α which is smaller than 90° and greater than 0°; and
where the conveying devices (200, 940) are moved along a further section (123, 323) of the path of the transfer conveyor (120, 320) in synchronism with the containers (102, 302) in the infeed flow;
**characterized in that**
the further section (123, 323) of the path being arranged such that the conveying devices (200, 940) continuously approach the infeed flow such that the circulating guide elements (122, 222, 322, 960) each immerse between two successive containers in the infeed flow and are made to mechanically contact the containers (102, 302) in the infeed flow, so that the transfer conveyor (120, 320) assumes control over transporting the containers, in particular their speed.

9. Method according to claim 8, where the containers (102, 302) are separated by the transfer device when the containers are received from the infeed flow.

10. Method according to claim 8 or 9, where the containers are decelerated by mechanical engagement of at least one in particular controllably lockable and/or controllably unlockable stop element (126, 226) of the guide elements (122, 222) and/or pushed forward by mechanical engagement of at least one push element (960) of the guide elements (322).

11. Method according to claim 10, where some or all conveying devices are by a plurality of controllable track switches (332) fed out from a main line (330) of the transfer conveyor (320) to a plurality of branch lines (331) associated with the outfeed container lanes.

12. Method according to one of the claims 8 to 11, where the angle α is represented approximately by the formula cos *α* = *vₒᵤₜ*/*vₜᵣₐₙₛ* with a uniform conveying speed *vₒᵤₜ* of the containers in the outfeed flow and a uniform conveying speed *vₜᵣₐₙₛ* of the containers along the section (124) of the path of the transfer conveyor.

13. Method according to one of the claims 8 to 12, where the containers fed out in multiple lanes are by way of a pair of long-stator linear motor drives (165-1, 165-2), being disposed parallel to each other and having a plurality of conveying devices connected to each other in pairs by a cross member (170), in particular an impact bar, preferably aligned perpendicular to the transport track, and/or decelerated and/or buffered and/or grouped.

## Revendications

1. Dispositif permettant la répartition et le regroupement de récipients dans une installation de traitement de récipients, comprenant :
un convoyeur d'entrée (100, 300) conçu pour convoyer une pluralité de récipients (102, 302) dans un flux d'entrée sur une seule ligne et dans lequel le convoyeur d'entrée (100, 300) présente une bande transporteuse (101, 301) permettant le transport des récipients sur une seule ligne, dans lequel les récipients sont convoyés debout sur la bande transporteuse ;
un convoyeur de sortie (140, 340) conçu pour faire sortir les récipients sur plusieurs lignes ; et
un convoyeur de transfert (120, 320) associé au convoyeur d'entrée et au convoyeur de sortie et muni d'une pluralité d'éléments de guidage circulants (122, 222, 322, 960) pour les récipients ;
dans lequel le convoyeur de transfert (120, 320) comprend un entraînement à moteur linéaire à stator long (250, 900) avec une pluralité de moyens de convoyage (200, 940) mobiles individuellement et indépendamment les uns des autres au niveau desquels sont agencés les éléments de guidage (122, 222, 322, 960) ;
dans lequel le convoyeur de transfert (120, 320) est conçu pour distribuer les récipients, en les gardant debout, depuis le flux d'entrée sur une seule ligne vers le flux de sortie sur plusieurs lignes grâce à un guidage ciblé, en particulier par poussée et/ou freinage, pratiqué au moyen des éléments de guidage circulants (122, 222, 322, 960) ; et
dans lequel le convoyeur de transfert (120, 320) présente en outre au moins une voie (124, 330) croisant le convoyeur de sortie (140, 340) avec un angle α inférieur à 90° et supérieur à 0° ;
**caractérisé en ce que**
le convoyeur de transfert (120, 320) comprend une autre voie (123, 323) le long de laquelle les éléments de guidage circulants (122, 222, 322, 960) sont déplacés dans le flux d'entrée de manière synchrone avec les récipients (102, 302) se tenant sur la bande transporteuse (101, 301) et qui est agencée de telle manière que l'autre voie (123, 323) se rapproche en continu de la bande transporteuse (101, 301) du convoyeur d'entrée (100, 300) de telle sorte que les éléments de guidage circulants (122, 222, 322, 960) plongent respectivement entre deux récipients successifs au sein du flux d'entrée et peuvent être mis en contact mécanique avec les récipients (102, 302) dans le flux d'entrée de sorte que le convoyeur de transfert (120, 320) prend en charge le transport des récipients, en particulier leur vitesse.

2. Dispositif selon la revendication 1, dans lequel le convoyeur de sortie (140, 340) présente au moins une bande transporteuse (145), en particulier une pluralité de bandes transporteuses (145-1 à 145-6) agencées parallèlement les unes aux autres et permettant le transport de récipients sur plusieurs lignes.

3. Dispositif selon la revendication 1 ou 2, dans lequel les éléments de guidage (122, 222) présentent respectivement au moins un élément de butée (126, 226), en particulier verrouillable de manière commandée et/ou déverrouillable de manière commandée, conçu de manière à pouvoir être utilisé pour freiner au moins un récipient (102) par mise en prise mécanique avec ledit récipient.

4. Dispositif selon la revendication 1 ou 2, dans lequel les éléments de guidage (322) présentent respectivement au moins un élément de poussée (200, 960) conçu de manière à pouvoir être utilisé pour une poussée latéralement stable d'au moins un récipient (302) par mise en prise mécanique avec ledit récipient.

5. Dispositif selon la revendication 4, dans lequel le convoyeur de transfert (320) présente en outre une pluralité d'aiguillages (332) commandables qui relient une voie principale (330) du convoyeur de transfert à une pluralité de voies secondaires (331) associées aux lignes de récipients sortantes.

6. Dispositif selon l'une quelconque des revendications précédentes, dans lequel l'angle α est approximativement fourni par la formule cos*α* = *vₐᵤₛ*/*vₜᵣₐₙₛ* avec une vitesse de convoyage *vₐᵤₛ* constante des récipients dans le flux de sortie et une vitesse de convoyage *vₜᵣₐₙₛ* constante des récipients le long de la voie (124) du convoyeur de transfert.

7. Dispositif selon l'une quelconque des revendications précédentes, dans lequel le convoyeur de sortie (140, 160 ; 340) comprend en outre une paire d'entraînements à moteur linéaire à stator long (165-1, 165-2) agencés en parallèle et munis d'une pluralité de moyens de convoyage reliés par paires grâce à un élément transversal (170), en particulier une barre de mise en mouvement.

8. Procédé de répartition et de regroupement de récipients dans une installation de traitement de récipients, comprenant les étapes consistant à :
convoyer sur une ligne unique une pluralité de récipients (102, 302) vers un convoyeur de transfert (120, 320) au moyen d'une bande transporteuse (101, 301) d'un convoyeur d'entrée (100, 300), dans lequel les récipients sont convoyés debout sur la bande transporteuse ;
faire sortir les récipients du convoyeur de transfert (120, 320) sur plusieurs lignes ; et répartir les récipients depuis le flux d'entrée sur une seule ligne vers le flux de sortie sur plusieurs lignes au moyen du convoyeur de transfert (120, 320) ;
dans lequel les récipients (102, 302) sont répartis au moyen d'un entraînement à moteur linéaire à stator long (250, 900) munis d'une pluralité de moyens de convoyage (200, 940) mobiles individuellement et indépendamment les uns des autres ;
dans lequel la répartition des récipients a lieu grâce à un guidage ciblé, en particulier par poussée et/ou freinage, des récipients transportés debout au moyen d'une pluralité d'éléments de guidage circulants (122, 222, 322) du convoyeur de transfert qui sont agencés au niveau des moyens de convoyage (200, 940) ;
dans lequel les récipients sont déplacés, par le convoyeur de transfert (120, 320) permettant de répartir les récipients, le long d'une voie (124, 330) du convoyeur de transfert (120, 320) croisant les lignes de récipients sortantes avec un angle a inférieur à 90° et supérieur à 0° ; et
dans lequel les moyens de convoyage (200, 940) sont déplacés de manière synchrone avec les récipients (102, 302) au sein du flux d'entrée le long d'une autre voie (123, 323) du convoyeur de transfert (120, 320) ;
**caractérisé en ce que**
l'autre voie (123, 323) est agencée de telle manière que les moyens de convoyage (200, 940) se rapprochent en continu du flux d'entrée de sorte que les éléments de guidage (122, 222, 322, 960) plongent respectivement entre deux récipients successifs au sein du flux d'entrée et peuvent être mis en contact mécanique avec les récipients (102, 302) dans le flux d'entrée de sorte que le convoyeur de transfert (120, 320) prend en charge le transport des récipients, en particulier leur vitesse.

9. Procédé selon la revendication 8, dans lequel les récipients (102, 302) sont individualisés lors de la prise en charge des récipients du flux d'entrée par le dispositif de transfert.

10. Procédé selon la revendication 8 ou 9, dans lequel les récipients sont freinés par mise en prise mécanique d'au moins un élément de butée (126, 226), en particulier verrouillable de manière commandée et/ou déverrouillable de manière commandée, des éléments de guidage (122, 222) et/ou sont poussés par mise en prise mécanique d'au moins un élément de poussée (960) des éléments de guidage (322).

11. Procédé selon la revendication 10, dans lequel certains ou tous les moyens de convoyage sont détournés par une pluralité d'aiguillages (332) commandables d'une voie principale (330) du convoyeur de transfert (320) vers une pluralité de voies secondaires (331) associées aux lignes de récipients sortantes.

12. Procédé selon l'une quelconque des revendications 8 à 11, dans lequel l'angle α est approximativement fourni par la formule cos*α* = *^{v}ₐᵤₛ*/*^{v}ₜᵣₐₙₛ* avec une vitesse de convoyage ^{v}*ₐᵤₛ* constante des récipients dans le flux de sortie et une vitesse de convoyage ^{v}*ₜᵣₐₙₛ* constante des récipients le long de la voie (124) du convoyeur de transfert.

13. Procédé selon l'une quelconque des revendications 8 à 12, dans lequel les récipients sortants sur plusieurs lignes sont orientés de manière préférée perpendiculairement au chemin de transport et/ou retardés et/ou poussés et/ou regroupés au moyen d'une paire d'entraînements à moteur linéaire à stator long (165-1, 165-2) agencés en parallèle et munis d'une pluralité de moyens de convoyage reliés par paires grâce à un élément transversal (170), en particulier une barre de mise en mouvement.
